(19) Europäisches Patentamt / European Patent Office / Office européen des brevets

(11) **EP 2 182 484 B1**

(12) **EUROPEAN PATENT SPECIFICATION**

(45) Date of publication and mention
of the grant of the patent:
**27.02.2013 Bulletin 2013/09**

(21) Application number: **08739894.7**

(22) Date of filing: **04.04.2008**

(51) Int Cl.:
*G06T 3/40* (2006.01)   *G09G 3/20* (2006.01)
*G09G 5/36* (2006.01)   *H04N 1/393* (2006.01)
*H04N 5/262* (2006.01)

(86) International application number:
**PCT/JP2008/056788**

(87) International publication number:
**WO 2009/028230 (05.03.2009 Gazette 2009/10)**

(54) **ENLARGED IMAGE GENERATING DEVICE**

EINRICHTUNG ZUR ERZEUGUNG EINES VERGRÖSSERTEN BILDES

DISPOSITIF DE GÉNÉRATION D'IMAGE AGRANDIE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **30.08.2007 JP 2007223436**

(43) Date of publication of application:
**05.05.2010 Bulletin 2010/18**

(73) Proprietor: **Mitsubishi Electric Corporation
Chiyoda-ku
Tokyo 100-8310 (JP)**

(72) Inventors:
• **SUKENO, Junji
  Tokyo 100-8310 (JP)**
• **HATANO, Yoshiko
  Tokyo 100-8310 (JP)**

(74) Representative: **HOFFMANN EITLE
Patent- und Rechtsanwälte
Arabellastrasse 4
81925 München (DE)**

(56) References cited:
WO-A1-97/17801          JP-A- 04 366 894
JP-A- 2002 016 795      JP-A- 2002 024 815
JP-A- 2003 174 557      JP-B2- 3 739 405
US-A1- 2002 076 121

• DUBE S ET AL: "An adaptive algorithm for image resolution enhancement", SIGNALS, SYSTEMS AND COMPUTERS, 2000. CONFERENCE RECORD OF THE THIRTY- FOURTH ASILOMAR CONFERENCE ON OCT. 29 - NOV. 1, 2000, PISCATAWAY, NJ, USA,IEEE, 29 October 2000 (2000-10-29), pages 1731-1734VOL.2, XP032142533, DOI: 10.1109/ACSSC.2000.911284 ISBN: 978-0-7803-6514-8

**Description**

Technical Field

The present invention relates to an enlarged image generating device which performs interpolation processing on an inputted original image to generate an enlarged image.

Background Art

As an interpolation method for generating an enlarged image, the nearest neighbor interpolation and the bi-linear interpolation are widely known. Those interpolation methods are conducted by a small number of arithmetic operations, and accordingly are employed in a case where real-time processing is required. On the other hand, a higher-order interpolation method called bicubic interpolation, which is considered to be capable of keeping information loss to a minimum, obtains a natural image. However, the bicubic interpolation is conducted by a large number of arithmetic operations, and its processing is time-consuming. Therefore, the bicubic interpolation is not suitable for real-time processing.

Patent Document 1 proposes a method of determining directivity from a difference between two pixels in oblique directions forming an angle (0°<angle<90°) with a horizontal direction or a vertical direction, and generating one generated pixel of an enlarged image with minimal blur by linear interpolation from pixel values of four original pixels defining a parallelogram inclined in the direction (parallel to the vertical direction and inclined with respect to the horizontal direction).

As a method of alleviating a reduction of correlation in vertical and horizontal directions, which is a problem inherent in the interpolation method of Patent Document 1, Patent Document 2 proposes a method of summing linear interpolation results in the vertical and horizontal directions and linear interpolation results in the oblique directions at a constant ratio to generate one generated pixel of an enlarged image.

Patent Document 1: Japanese Patent No. 3739405
Patent Document 2: Japanese Patent Application Laid-Open No. 2002-24815

In the interpolation method disclosed in Patent Document 1, as to one generated pixel, oblique directions are determined from a pixel difference of neighboring four pixels, and an interpolation direction is determined from the oblique directions, to thereby perform interpolation processing. On that occasion, the oblique direction is determined based on a line segment defined by two points at which the pixel difference is a minimum and two line segments which sandwich the above-mentioned line segment therebetween with one of the two points being as an endpoint, whereby judgment accuracy of the oblique direction is improved. However, once the oblique direction has been judged, the interpolation direction has been determined, and the interpolation value is computed, whether or not the interpolation value is appropriate is not determined. Therefore, if the oblique direction is close to the horizontal direction or the vertical direction, in some cases, the interpolation value may not be appropriate to generate an isolated point depending on the interpolation position and pixel values of the neighboring four pixels.

Further, in the interpolation method disclosed in Patent Document 2, the linear interpolation results in the vertical and horizontal directions and the linear interpolation results in the oblique directions are summed uniformly at a constant rate, and thus, appropriate interpolation results may not be selected depending on the interpolation position in some cases.

That is, Patent Documents 1 and 2 have a problem that a blur may be increased in size or an isolated point may be generated in some cases because appropriate interpolation is not necessarily performed.

Disclosure of Invention

The present invention has been made to solve the above-mentioned problems, and therefore an object thereof is to provide an enlarged image generating device capable of generating an excellent enlarged image without increasing a blur in size or generating an isolated point.

An enlarged image generating device according to the present invention, which is for generating an enlarged image from an inputted original image, includes: a horizontal/vertical direction interpolation section arranged to generate a first interpolation pixel value candidate of one generated pixel which is surrounded by a first original pixel group composed of four original pixels adjacent to each other in both a horizontal direction and a vertical direction and constitutes an enlarged image, by linear interpolation from the first original pixel group; an oblique direction pattern search section arranged to search, in a given area, a plurality of sets of second original pixel groups each composed of four original pixels, the four original pixels being adjacent to each other in at least one of the horizontal direction and the vertical direction and surrounding the generated pixel so that two parallel sides of a parallelogram to be defined by the four original pixels are parallel to at least one of the horizontal direction and the vertical direction; an interpolation direction evaluating section arranged to compute an interpolation direction evaluation value from two sets of horizontal direction difference values obtained by computing a difference between pixel values along each of two sides in the horizontal direction of the four original pixels composing the first original pixel group, from two sets of vertical direction difference values obtained by computing a difference between pixel values along each of two sides in the vertical direction of the four original pixels composing the first original pixel group, and from two sets of oblique direction difference values obtained by computing, as to each of the plurality of sets of second original pixel groups obtained by the oblique direction pattern search section, a difference between pixel values along each of two sides in an oblique direction which is not the vertical direction or the vertical direction of the four original pixels composing said second original pixel group, and arranged to determine an interpolation direction in accordance with the interpolation direction evaluation value; an oblique direction interpolation section arranged to select one original pixel group among the first original pixel group and the plurality of sets of second original pixel groups based on the interpolation direction determined by the interpolation direction evaluating section, and arranged to generate a second interpolation pixel value candidate of the generated pixel from the one original pixel group by linear interpolation; and an interpolation pixel value determining section arranged to determine a pixel value of the generated pixel from the first interpolation pixel value candidate generated by the horizontal/vertical interpolation direction section and the second interpolation pixel value candidate generated by the oblique direction interpolation section.

The enlarged image generating device according to the present invention includes the interpolation direction evaluating section which determines the interpolation direction by the interpolation direction evaluation value. Further, the interpolation pixel value is computed based on the interpolation direction determined by the interpolation direction evaluating section, and the interpolation pixel value is evaluated by the interpolation pixel value determining section, whereby the final interpolation pixel value is determined. Accordingly, it is possible to generate an excellent enlarged image without increasing a blur in size or generating an isolated point.

These and other objects, features, aspects and advantages of the present invention will become more apparent from the following detailed description of the present invention when taken in conjunction with the accompanying drawings.

Brief Description of Drawings

FIG. 1 is a block diagram showing a structure of main parts of an enlarged image generating device according to a first embodiment of the present invention.

FIG. 2 is a diagram for describing a pixel scanning direction of a frame image.

FIG. 3 is a block diagram showing a structure of main parts of a memory control section.

FIG. 4 is a block diagram showing a structure of main parts of a horizontal/vertical direction interpolation section.

FIG. 5 is a block diagram showing a structure of main parts of an interpolation direction determining section.

FIG. 6 is a block diagram showing a structure of main parts of an oblique direction interpolation section.

FIG. 7 is a block diagram showing a structure of main parts of an interpolation pixel value determining section.

FIG. 8 is a diagram for describing an operation of the horizontal/vertical direction interpolation section.

FIG. 9 is a diagram for describing an effective oblique direction pattern (pattern 0) outputted from an oblique direction pattern search section.

FIG. 10 is a diagram for describing an effective oblique direction pattern (pattern 1) outputted from the oblique direction pattern search section.

FIG. 11 is a diagram for describing an effective oblique direction pattern (pattern 2) outputted from the oblique direction pattern search section.

FIG. 12 is a diagram for describing an effective oblique direction pattern (pattern 3) outputted from the oblique direction pattern search section.

FIG. 13 is a diagram for describing an effective oblique direction pattern (pattern 4) outputted from the oblique direction pattern search section.

FIG. 14 is a diagram for describing an effective oblique direction pattern (pattern 5) outputted from the oblique direction pattern search section.

FIG. 15 is a diagram for describing an effective oblique direction pattern (pattern 6) outputted from the oblique direction pattern search section.

FIG. 16 is a diagram for describing an effective oblique direction pattern (pattern 7) outputted from the oblique direction pattern search section.

FIG. 17 is a diagram for describing an effective oblique direction pattern (pattern 8) outputted from the oblique direction pattern search section.

FIG. 18 is a diagram for describing an effective oblique direction pattern (pattern 9) outputted from the oblique direction pattern search section.

FIG. 19 is a diagram for describing an effective oblique direction pattern (pattern 10) outputted from the oblique direction pattern search section.

FIG. 20 is a diagram for describing an effective oblique direction pattern (pattern 11) outputted from the oblique direction pattern search section.

FIG. 21 is a diagram for describing an effective oblique direction pattern (pattern 12) outputted from the oblique direction pattern search section.

FIG. 22 is a diagram for describing an effective oblique direction pattern (pattern 13) outputted from the oblique direction pattern search section.

FIG. 23 is a diagram for describing an effective oblique direction pattern (pattern 14) outputted from the oblique direction pattern search section.

FIG. 24 is a diagram for describing an effective oblique direction pattern (pattern 15) outputted from the oblique direction pattern search section.

FIG. 25 is a diagram for describing an effective oblique direction pattern (pattern 16) outputted from the oblique direction pattern search section.

FIG. 26 is a diagram for describing an effective oblique direction pattern (pattern 17) outputted from the oblique direction pattern search section.

FIG. 27 is a diagram for describing an effective oblique direction pattern (pattern 18) outputted from the oblique direction pattern search section.

FIG. 28 is a diagram for describing an effective oblique direction pattern (pattern 19) outputted from the oblique direction pattern search section.

FIG. 29 is a diagram for describing an effective oblique direction pattern (pattern 20) outputted from the oblique direction pattern search section.

FIG. 30 is a diagram for describing an effective oblique direction pattern (pattern 21) outputted from the oblique direction pattern search section.

FIG. 31 is a diagram for describing an effective oblique direction pattern (pattern 22) outputted from the oblique direction pattern search section.

FIG. 32 is a diagram for describing a representative point of the oblique direction pattern (pattern 1) and condition to be judged as an effective oblique direction pattern.

FIG. 33 is a diagram for describing a representative point of the oblique direction pattern (pattern 2) and condition to be judged as an effective oblique direction pattern.

FIG. 34 is a diagram for describing a representative point of the oblique direction pattern (pattern 3) and condition to be judged as an effective oblique direction pattern.

FIG. 35 is a diagram for describing a representative point of the oblique direction pattern (pattern 4) and condition to be judged as an effective oblique direction pattern.

FIG. 36 is a diagram for describing a representative point of the oblique direction pattern (pattern 5) and condition to be judged as an effective oblique direction pattern.

FIG. 37 is a diagram for describing a representative point of the oblique direction pattern (pattern 6) and condition to be judged as an effective oblique direction pattern.

FIG. 38 is a diagram for describing a representative point of the oblique direction pattern (pattern 7) and condition to be judged as an effective oblique direction pattern.

FIG. 39 is a diagram for describing a representative point of the oblique direction pattern (pattern 8) and condition to be judged as an effective oblique direction pattern.

FIG. 40 is a diagram for describing a representative point of the oblique direction pattern (pattern 9) and condition to be judged as an effective oblique direction pattern.

FIG. 41 is a diagram for describing a representative point of the oblique direction pattern (pattern 10) and condition to be judged as an effective oblique direction pattern.

FIG. 42 is a diagram for describing a representative point of the oblique direction pattern (pattern 11) and condition to be judged as an effective oblique direction pattern.

FIG. 43 is a diagram for describing a representative point of the oblique direction pattern (pattern 12) and condition to be judged as an effective oblique direction pattern.

FIG. 44 is a diagram for describing a representative point of the oblique direction pattern (pattern 13) and condition to be judged as an effective oblique direction pattern.

FIG. 45 is a diagram for describing a representative point of the oblique direction pattern (pattern 14) and condition to be judged as an effective oblique direction pattern.

FIG. 46 is a diagram for describing a representative point of the oblique direction pattern (pattern 15) and condition to be judged as an effective oblique direction pattern.

FIG. 47 is a diagram for describing a representative point of the oblique direction pattern (pattern 16) and condition to be judged as an effective oblique direction pattern.

FIG. 48 is a diagram for describing a representative point of the oblique direction pattern (pattern 17) and condition to be judged as an effective oblique direction pattern.

FIG. 49 is a diagram for describing a representative point of the oblique direction pattern (pattern 18) and condition to be judged as an effective oblique direction pattern.

FIG. 50 is a diagram for describing a representative point of the oblique direction pattern (pattern 19) and condition to be judged as an effective oblique direction pattern.

FIG. 51 is a diagram for describing a representative point of the oblique direction pattern (pattern 20) and condition to be judged as an effective oblique direction pattern.

FIG. 52 is a diagram for describing a representative point of the oblique direction pattern (pattern 21) and condition to be judged as an effective oblique direction pattern.

FIG. 53 is a diagram for describing a representative point of the oblique direction pattern (pattern 22) and condition to be judged as an effective oblique direction pattern.

FIG. 54 is a diagram for describing a second interpolation coefficient of the oblique direction pattern (pattern 1) in the oblique direction interpolation section.

FIG. 55 is a diagram for describing a second interpolation coefficient of the oblique direction pattern (pattern 2) in the oblique direction interpolation section.

FIG. 56 is a diagram for describing a second interpolation coefficient of the oblique direction pattern (pattern 3) in the oblique direction interpolation section.

FIG. 57 is a diagram for describing a second interpolation coefficient of the oblique direction pattern (pattern 4) in the oblique direction interpolation section.

FIG. 58 is a diagram for describing a second interpolation coefficient of the oblique direction pattern (pattern 5) in the oblique direction interpolation section.

FIG. 59 is a diagram for describing a second interpolation coefficient of the oblique direction pattern (pattern 6) in the oblique direction interpolation section.

FIG. 60 is a diagram for describing a second interpolation coefficient of the oblique direction pattern (pattern 7) in the oblique direction interpolation section.

FIG. 61 is a diagram for describing a second interpolation coefficient of the oblique direction pattern (pattern 8) in the oblique direction interpolation section.

FIG. 62 is a diagram for describing a second interpolation coefficient of the oblique direction pattern (pattern 9) in the oblique direction interpolation section.

FIG. 63 is a diagram for describing a second interpolation coefficient of the oblique direction pattern (pattern 10) in the oblique direction interpolation section.

FIG. 64 is a diagram for describing a second interpolation coefficient of the oblique direction pattern (pattern 11) in the oblique direction interpolation section.

FIG. 65 is a diagram for describing a second interpolation coefficient of the oblique direction pattern (pattern 12) in the oblique direction interpolation section.

FIG. 66 is a diagram for describing a second interpolation coefficient of the oblique direction pattern (pattern 13) in the oblique direction interpolation section.

FIG. 67 is a diagram for describing a second interpolation coefficient of the oblique direction pattern (pattern 14) in the oblique direction interpolation section.

FIG. 68 is a diagram for describing a second interpolation coefficient of the oblique direction pattern (pattern 15) in the oblique direction interpolation section.

FIG. 69 is a diagram for describing a second interpolation coefficient of the oblique direction pattern (pattern 16) in the oblique direction interpolation section.

FIG. 70 is a diagram for describing a second interpolation coefficient of the oblique direction pattern (pattern 17) in the oblique direction interpolation section.

FIG. 71 is a diagram for describing a second interpolation coefficient of the oblique direction pattern (pattern 18) in the oblique direction interpolation section.

FIG. 72 is a diagram for describing a second interpolation coefficient of the oblique direction pattern (pattern 19) in the oblique direction interpolation section.

FIG. 73 is a diagram for describing a second interpolation coefficient of the oblique direction pattern (pattern 20) in the oblique direction interpolation section.

FIG. 74 is a diagram for describing a second interpolation coefficient of the oblique direction pattern (pattern 21) in the oblique direction interpolation section.

FIG. 75 is a diagram for describing a second interpolation coefficient of the oblique direction pattern (pattern 22) in the oblique direction interpolation section.

FIG. 76 is a diagram for describing an interpolation direction evaluation value computed by an interpolation direction evaluation value computing section.

FIG. 77 is another diagram for describing the interpolation direction evaluation value computed by the interpolation direction evaluation value computing section.

FIG. 78 is still another diagram for describing the interpolation direction evaluation value computed by the interpolation direction evaluation value computing section.

FIG. 79 is a diagram for describing an example of operations of the horizontal/vertical direction interpolation section, the interpolation direction determining section, the oblique direction interpolation section and the interpolation pixel value determining section.

FIG. 80 is a diagram for describing another example of the operations of the horizontal/vertical direction interpolation section, the interpolation direction determining section, the oblique direction interpolation section and the interpolation pixel value determining section.

FIG. 81 is a diagram for describing still another example of the operations of the horizontal/vertical direction interpolation section, the interpolation direction determining section, the oblique direction interpolation section and the interpolation pixel value determining section.

Best Mode for Carrying Out the Invention

(First embodiment)

(Structure of motion vector detecting device)

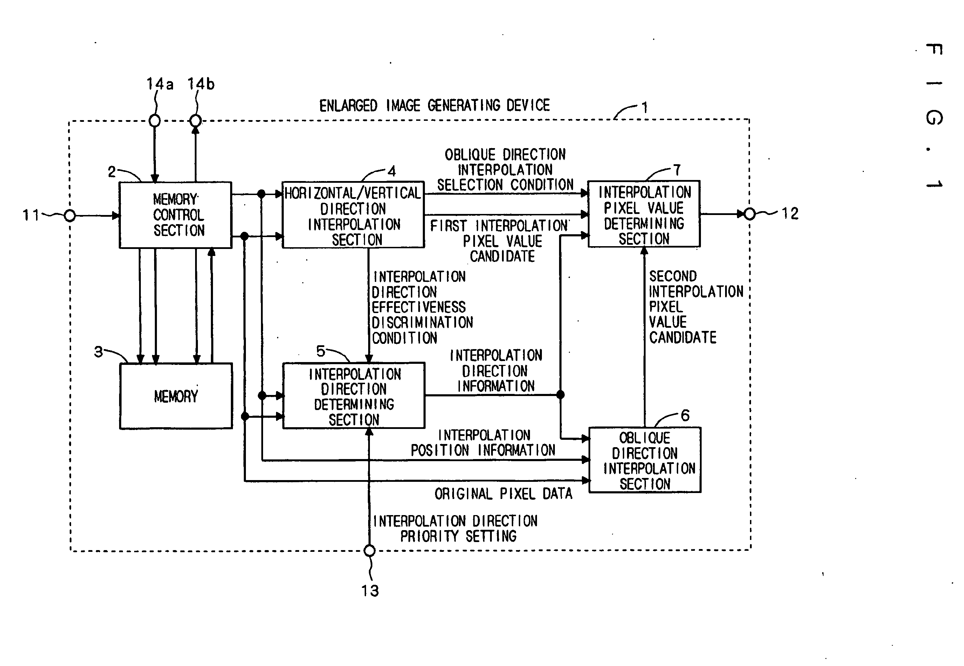

FIG. 1 is a block diagram showing a structure of main parts of an enlarged image generating device 1 according to a first embodiment of the present invention.

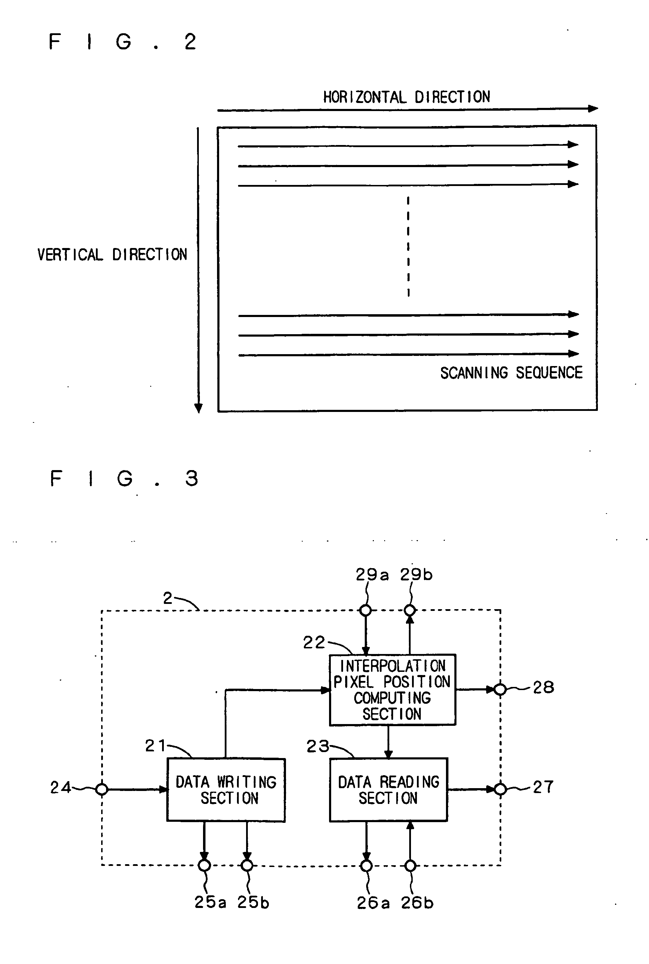

The enlarged image generating device 1 generates and outputs an enlarged image of an original image to be inputted. An image for one frame, on which pixel scanning in a horizontal direction and line scanning in a vertical direction are performed as shown in FIG. 2, is inputted to the enlarged image generating device 1, whereby the image for one frame which has been enlarged in the horizontal direction and the vertical direction by interpolation processing is outputted. Note that in FIG. 2, scanning directions are not limited thereto, and the horizontal direction and the vertical direction may be reversed.

The enlarged image generating device 1 includes three input terminals 11, 13 and 14a, a memory control section 2, a memory 3, a horizontal/vertical direction interpolation section 4, an interpolation direction determining section 5, an oblique direction interpolation section 6, an interpolation pixel value determining section 7, and two output terminals 12 and 14b.

A still image taken by, for example, a digital camera or an image (original image) for one frame of a dynamic image taken by, for example, a video camcorder is inputted to the input terminal 11. Naturally, an image obtained by an imaging device of a digital camera or a video camcorder may be directly inputted, or an image which has been stored in a memory once may be read and inputted. The image data inputted to the input terminal 11 is inputted to the memory control section 2. Note that each pixel of an original image is referred to as an original pixel, and a value thereof is referred to as an original pixel value (original pixel data).

The memory control section 2 outputs the original pixel data inputted via the input terminal 11 to the memory 3 to be written therein. Further, the memory control section 2 receives an enlargement processing request from a control section (not shown) via the input terminal 14a, and starts interpolation processing, and updates an interpolation position. At the same time, the memory control section 2 outputs interpolation position information thereof to the horizontal/vertical direction interpolation section 4, the interpolation direction determining section 5 and the oblique direction interpolation section 6. Further, the memory control section 2 reads the original pixel data from the memory 3, and outputs the original pixel data to the horizontal/vertical direction interpolation section 4, the interpolation direction determining section 5 and the oblique direction interpolation section 6. Moreover, in a case where there is generated original pixel data which is no longer required for the interpolation processing in the memory 3 through updating of the interpolation position, the memory control section 2 requests a subsequent original pixel data from the control section via the output terminal 14b. The memory 3 is composed of line memory for several lines. Note that the structure of the memory 3 is not limited thereto.

The horizontal/vertical direction interpolation section 4 computes, by linear interpolation, a first interpolation pixel value candidate (of one generated pixel constituting an enlarged image) from the interpolation position by using four original pixels which surround an interpolation pixel and are adjacent to each other in both the horizontal and vertical directions among the original pixels read from the memory 3 via the memory control section 2, and outputs the first interpolation pixel value candidate to the interpolation pixel value determining section 7. Then, the horizontal/vertical direction interpolation section 4 computes a oblique direction interpolation selection condition from a value of a point, at which a line segment defined by two original pixels which are adjacent to each other in the vertical direction or the vertical direction of the four original pixels is divided internally by a straight line which passes through the interpolation position and is parallel to the vertical direction or the horizontal direction, and outputs the oblique direction interpolation selection condition to the interpolation pixel value determining section 7. Further, the horizontal/vertical direction interpolation section 4 computes an interpolation direction effectiveness discrimination condition from a value of a point, at which two original pixels which are adjacent to each other in the horizontal direction or the vertical direction among the four original pixels are divided internally at a given constant ratio, and outputs the interpolation direction effectiveness discrimination condition to the interpolation direction determining section 5.

The interpolation direction determining section 5 determines one interpolation direction among a plurality of interpolation directions in accordance with the interpolation position information outputted from the memory control section 2, the original pixel data required for interpolation, the interpolation direction effectiveness discrimination condition inputted from the horizontal/vertical direction interpolation section 4, and interpolation direction priority setting inputted from the control section (not shown) via the input terminal 13, and outputs the determined interpolation direction information to the oblique direction interpolation section 6 and the interpolation pixel value determining section 7.

The oblique direction interpolation section 6 performs linear interpolation based on the interpolation position information outputted from the memory control section 2, the original pixel data, and the interpolation direction information outputted from the interpolation direction determining section 5 to compute a second interpolation pixel value candidate, and outputs the second interpolation pixel value candidate to the interpolation pixel value determining section 7.

The interpolation pixel value determining section 7 selects any one of the first interpolation pixel value candidate outputted from the horizontal/vertical direction interpolation section 4 and the second interpolation pixel value candidate outputted from the oblique direction interpolation section 6 based on the oblique direction interpolation selection condition outputted from the horizontal/vertical direction interpolation section 4 to determine an interpolation pixel value, and outputs the interpolation pixel value from the output terminal 12.

FIG. 3 is a block diagram showing a structure of main parts of the memory control section 2. The memory control section 2 includes input terminals 24, 26b and 29a, output terminals 25a, 25b, 26a, 27, 28 and 29b, a data writing section 21, an interpolation pixel position computing section 22 and a data reading section 23.

The data writing section 21 generates a write address, and outputs the original pixel data inputted from the input terminal 24 and a control signal including the write address from the output terminal 25b and the output terminal 25a, respectively. In addition, the data writing section 21 outputs an original pixel data writing state to the interpolation pixel position computing section 22.

The interpolation pixel position computing section 22 receives an enlargement processing request from the control section (not shown) via the input terminal 29a to update the interpolation positions (horizontal direction interpolation position and vertical direction interpolation position), and outputs the interpolation positions as the interpolation position information to the data reading section 23 and the output terminal 28. On that occasion, the interpolation pixel position computing section 22 grasps a line memory which is no longer required through updating of the vertical direction interpolation position, requests the control section via the output terminal 29b that the subsequent image data is inputted from the input terminal 24, and fills anew the line memory which is no longer required with the original pixel data.

The data reading section 23 computes a read address from the interpolation position inputted from the interpolation pixel position computing section 22, outputs a control signal including the read address from the output terminal 26a, reads the original pixel data from the input terminal 26b, and outputs the original pixel data from the output terminal 27.

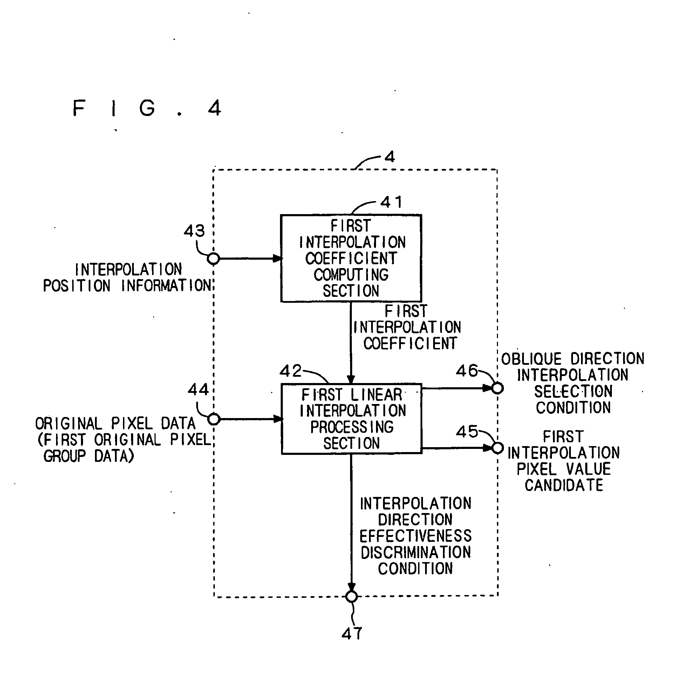

FIG. 4 is a block diagram showing a structure of main parts of the horizontal/vertical direction interpolation section 4. The horizontal/vertical direction interpolation section 4 includes input terminals 43 and 44, output terminals 45, 46 and 47, a first interpolation coefficient computing section 41 and a first linear interpolation processing section 42.

The first interpolation coefficient computing section 41 computes a first interpolation coefficient based on the interpolation position information inputted from the input terminal 43, and outputs the first interpolation coefficient to the first linear interpolation processing section 42.

The first linear interpolation processing section 42 performs linear interpolation on the original pixel data (referred to as first original pixel group data) inputted from the input terminal 44 using the first interpolation coefficient outputted from the first interpolation coefficient computing section 41, and outputs the first original pixel data as the first interpolation pixel value candidate from the output terminal 45. In addition, the first linear interpolation processing section 42 computes the oblique direction interpolation selection condition based on intermediate data which is computed in the interpolation processing to output the oblique direction interpolation selection condition from the output terminal 46, and computes the interpolation direction effectiveness discrimination condition to output the interpolation direction effectiveness discrimination condition from the output terminal 47.

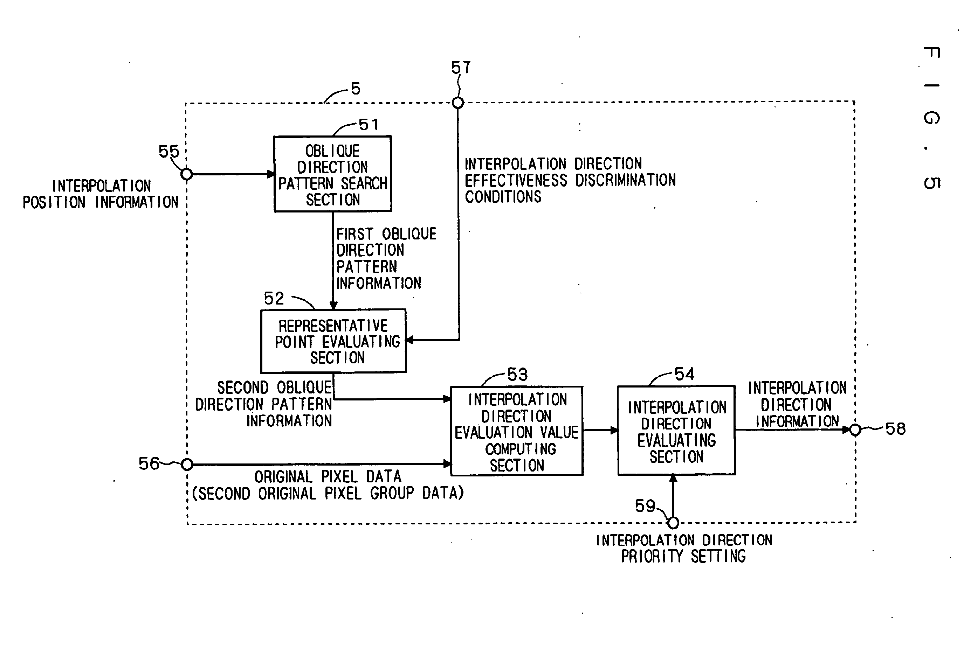

FIG. 5 is a block diagram showing a structure of main parts of the interpolation direction determining section 5. The interpolation direction determining section 5 includes input terminals 55, 56, 57 and 59, an output terminal 58, an oblique direction pattern search section 51, a representative point evaluating section 52, an interpolation direction evaluation value computing section 53 and an interpolation direction evaluating section 54.

The oblique direction pattern search section 51 searches for an oblique direction pattern to be searched from the interpolation position, and outputs an effective oblique direction pattern as first oblique direction pattern information to the representative point evaluating section 52.

The representative point evaluating section 52 selects a representative point of the effective oblique direction pattern based on the first oblique direction pattern information outputted from the oblique direction pattern search section 51, and computes an oblique direction pattern representative value qs. Then, the representative point evaluating section 52 evaluates the oblique direction pattern representative value qs from the interpolation direction effectiveness discrimination condition inputted from the input terminal 57, and outputs the effective oblique direction pattern as second oblique direction pattern information to the interpolation direction evaluation value computing section 53.

The interpolation direction evaluation value computing section 53 computes an interpolation direction evaluation value of the effective oblique direction pattern from the second oblique direction pattern information outputted from the representative point evaluating section 52 and the original pixel data inputted from the input terminal 56, and outputs the computed interpolation direction evaluation value to the interpolation direction evaluating section 54.

The interpolation direction evaluating section 54 determines an interpolation direction from the interpolation direction evaluation value of the effective oblique direction pattern outputted from the interpolation direction evaluation value computing section 53 and the interpolation direction priority setting inputted from the input terminal 59, and outputs the interpolation direction as interpolation direction information from the output terminal 58.

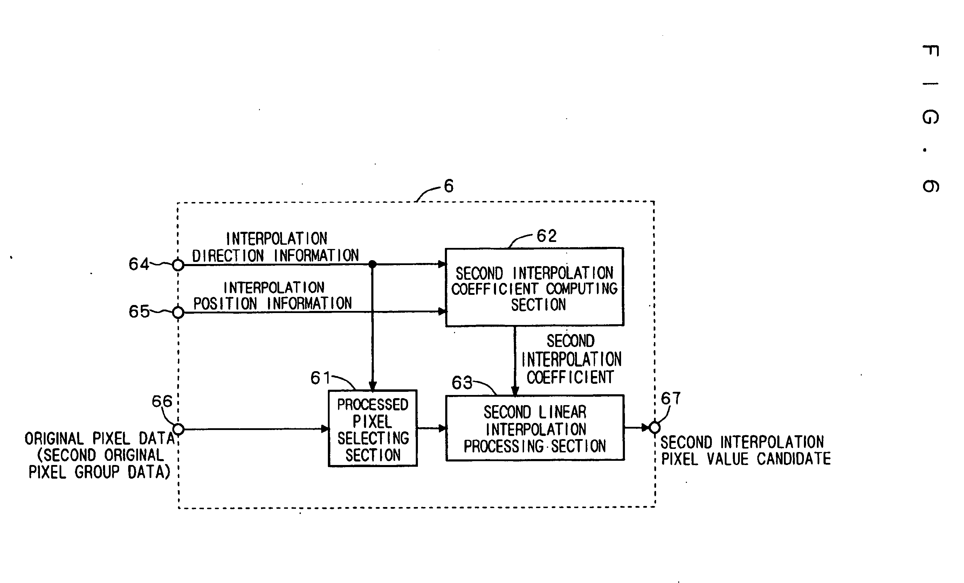

FIG. 6 is a block diagram showing a structure of main parts of the oblique direction interpolation section 6. The oblique direction interpolation section 6 includes input terminals 64, 65 and 66, an output terminal 67, a processed pixel selecting section 61, a second interpolation coefficient computing section 62 and a second linear interpolation processing section 63.

The processed pixel selecting section 61 selects the pixel data required for interpolation processing from the original pixel data inputted from the input terminal 66 based on the interpolation direction information inputted from the input terminal 64, and outputs the selected pixel data to the second linear interpolation processing section 63.

The second interpolation coefficient computing section 62 computes a second interpolation coefficient from the interpolation direction information inputted from the input terminal 64 and the interpolation position information inputted from the input terminal 65, and outputs the second interpolation coefficient to the second linear interpolation processing section 63.

The second linear interpolation processing section 63 interpolates the original pixel data outputted from the processed pixel selecting section 61 with the second interpolation coefficient outputted from the second interpolation coefficient computing section 62, and outputs the second interpolation pixel value candidate from the output terminal 67.

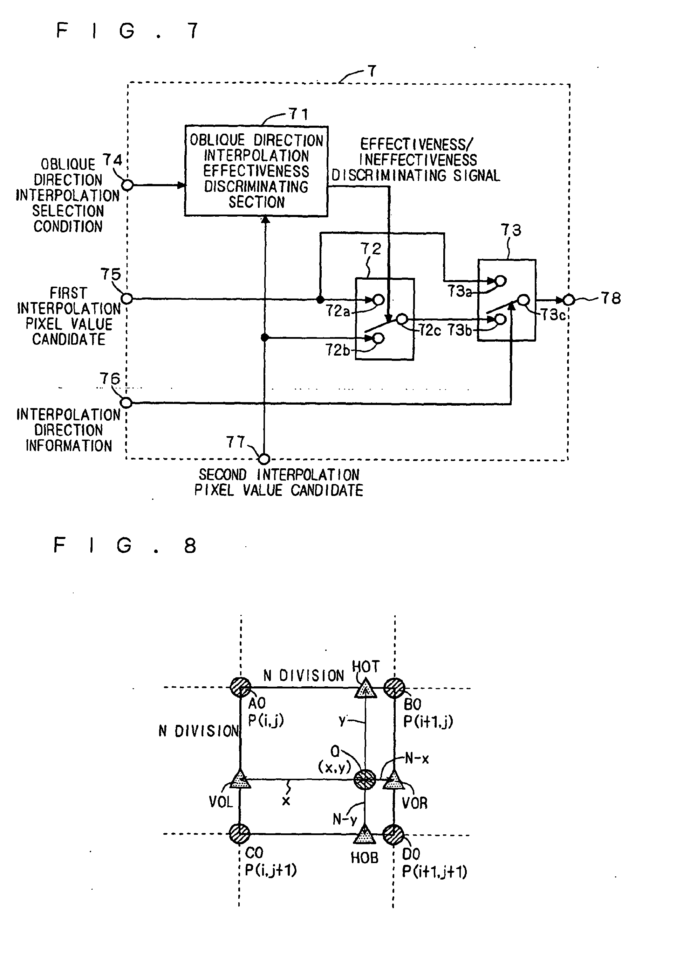

FIG. 7 is a block diagram showing a structure of main parts of the interpolation pixel value determining section 7. The interpolation pixel value determining section 7 includes input terminals 74, 75, 76 and 77, an output terminal 78, an oblique direction interpolation effectiveness discriminating section 71, a first interpolation pixel value selecting section 72 and a second interpolation pixel value selecting section 73.

The oblique direction interpolation effectiveness discriminating section 71 discriminates between effectiveness and ineffectiveness of the second interpolation pixel value candidate inputted from the input terminal 77 from the oblique direction interpolation selection condition inputted from the input terminal 74, and outputs an effectiveness/ineffectiveness discriminating signal to the first interpolation pixel value selecting section 72.

The first interpolation pixel value selecting section 72 switches between the first interpolation pixel value candidate inputted from the input terminal 75 and the second interpolation pixel value candidate inputted from the input terminal 77 in response to the effectiveness/ineffectiveness discriminating signal outputted from the oblique direction interpolation effectiveness discriminating section 71, and outputs the switched one to the second interpolation pixel value selecting section 73.

The second interpolation pixel value selecting section 73 switches between the first interpolation pixel value candidate inputted from the input terminal 75 and an output of the first interpolation pixel value selecting section 72, and outputs the switched one as an interpolation pixel value from the output terminal 78.

An operation of the enlarged image generating device 1 having the above-mentioned structure will be described below with reference to FIG. 1 to FIG. 7.

It is assumed here that, as shown in FIG. 2, there is an original image read by repeatedly performing pixel scanning in a horizontal direction successively in the vertical direction. Note that the reading direction is not limited thereto, and the horizontal direction and the vertical direction may be reversed.

With reference to FIGS. 1 and 3, when receiving the enlargement processing request from the control section (not shown) via the input terminal 14a, the memory control section 2 starts interpolation processing, and requests supply of the original pixel data from the control section via the output terminal 14b. Upon this, the original pixel data is inputted to the enlarged image generating device 1 from the input terminal 11. The original pixel data inputted from the input terminal 11 is inputted to the memory control section 2. The original pixel data inputted to the memory control section 2 is inputted to the data writing section 21 via the input terminal 24. The data writing section 21 generates a write address in accordance with the original pixel data inputted from the input terminal 24, and outputs the original pixel data inputted from the input terminal 24 and the control signal including the write address to the memory 3 from the output terminal 25b and the output terminal 25a, respectively. The memory 3 controls the original pixel data outputted from the memory control section 2 by the control signal including the write address, and stores the original pixel data.

The data writing section 21 outputs the original pixel data writing state to the interpolation pixel position computing section 22, and notifies the interpolation pixel position computing section 22 of start, continuation, stop or the like of the interpolation processing. The interpolation pixel position computing section 22 receives the original pixel data writing state outputted from the data writing section 21, and requests start/continuation/stop of supply of the original pixel data from the control section via the output terminal 29b. In addition, while the original pixel data required for enabling interpolation processing is being written into the memory 3, the interpolation pixel position computing section 22 updates the interpolation position and outputs the interpolation position information from the output terminal 28 to the horizontal/vertical direction interpolation section 4, the interpolation direction determining section 5 and the oblique direction interpolation section 6, and to the data reading section 23 as well. The data reading section 23 generates the read address based on the interpolation position outputted from the interpolation pixel position computing section 22, and outputs the control signal including the read address to the memory 3 from the output terminal 26a. The memory 3 reads the requested original pixel data from the control signal including the read address outputted from the memory control section 2, and outputs the original pixel data to the memory control section 2. The original pixel data outputted from the memory 3 is inputted to the memory control section 2 via the input terminal 26b, and is outputted from the output terminal 27 to the horizontal/vertical direction interpolation section 4, the interpolation direction determining section 5 and the oblique direction interpolation section 6.

The original pixel data and the interpolation position information outputted from the memory control section 2 are inputted to the horizontal/vertical direction interpolation section 4. With reference to FIG. 4, the interpolation position information is inputted to the first interpolation coefficient computing section 41 via the input terminal 43. The original pixel data is inputted to the first linear interpolation processing section 42 via the input terminal 44. The first interpolation coefficient computing section 41 computes the first interpolation coefficient from the interpolation position information inputted from the input terminal 43, and outputs the first interpolation coefficient to the first linear interpolation processing section 42. A technique of computing the first interpolation coefficient will be described below with reference to FIG. 8.

When it is assumed in FIG. 8 that a point Q is an interpolation pixel, the original pixels required for the first linear interpolation processing are points P (i, j), P (i+1, j), P (i, j+1) and P (i+1, j+1) (i and j are integers) which surround the interpolation pixel Q and are adjacent to each other in both the horizontal and vertical directions. Those four original pixels P are referred to a first original pixel group. Then, the interpolation pixel Q is assumed to be positioned at coordinates $(x, y)$ ($0 \leq x < N$, $0 \leq y < N$) obtained by N-division (N is an integer larger than 0) of a space among the original pixels P (hereinafter, the coordinates $(x, y)$ are referred to as an interpolation position $(x, y)$). That is, the interpolation pixel Q is a point obtained by dividing a quadrangle defined by the first original pixel group P (i, j), P (i+1, j), P (i, j+1) and P (i+1, j+1) internally at $x:(N-x)$ in the horizontal direction and $y:(N-y)$ in the vertical direction, and the first interpolation coefficient is $x:(N-x)$ in the horizontal direction and $y:(N-y)$ in the vertical direction. Note that for the sake of convenience of description, the points P (i, j), P (i+1, j), P (i, j+1) and P (i+1, j+1) are also referred to as A0, B0, C0 and D0, respectively.

The first linear interpolation processing section 42 performs linear interpolation processing on the first original pixel group data of the original pixel data inputted from the input terminal 44 using the first interpolation coefficient outputted from the first interpolation coefficient outputted from the first interpolation coefficient computing section 41 to compute the first interpolation pixel value candidate, and outputs the first interpolation pixel value candidate to the interpolation pixel value determining section 7 from the output terminal 45.

A first interpolation pixel value candidate q0 of the interpolation pixel Q positioned at the interpolation position $(x, y)$ is obtained from Expression (1) using pixel values a0, b0, c0 and d0 of the first original pixel group A0, B0, C0 and D0, respectively.

[Expression 1]

$$q0 = \frac{\{a0 \times (N - x) + b0 \times x\} \times (N - y) + \{c0 \times (N - x) + d0 \times x\} \times y}{N \times N} \quad ...(1)$$

Further, in FIG. 8, pixel values h0t, h0b, v0l and v0r of a point HOT at which a line segment A0B0 is divided internally at $x:(N-x)$ in the horizontal direction, a point HOB at which a line segment C0D0 is divided internally at $x:(N-x)$ in the horizontal direction, a point V0L at which a line segment A0C0 is divided internally at $y:(N-y)$ in the vertical direction and a point V0R at which a line segment B0D0 is divided internally at $y:(N-y)$ in the vertical direction, respectively, are obtained from Expressions (2), (3), (4) and (5), respectively.

[Expression 2]

$$h0t = \frac{a0 \times (N - x) + b0 \times x}{N} \ldots(2)$$

[Expression 3]

$$h0b = \frac{c0 \times (N - x) + d0 \times x}{N} \ldots(3)$$

[Expression 4]

$$v0l = \frac{a0 \times (N - y) + c0 \times y}{N} \ldots(4)$$

[Expression 5]

$$v0r = \frac{b0 \times (N - y) + d0 \times y}{N} \ldots(5)$$

The first linear interpolation processing section 42 computes maximum values max (h0t, h0b, v0l, v0r) and minimum values min (h0t, h0b, v01, v0r) of the pixel values h0t, h0b, v01 and v0r as the oblique direction interpolation selection condition, and outputs the oblique direction interpolation selection condition to the interpolation pixel value determining section 7 from the output terminal 46.

Further, it is assumed that a point at which the line segment A0B0 is divided internally at 1:3 is a point A01B03, a point at which the line segment A0B0 is divided internally at 1:1 is a point A01B01, a point at which the line segment A0B0 is divided internally at 3:1 is a point A03B01, a point at which the line segment C0D0 is divided internally at 1:3 is a point C01D03, a point at which the line segment C0D0 is divided internally at 1:1 is a point C01D01, a point at which the line segment C0D0 is divided internally at 3:1 is a point C03D01, a point at which the line segment A0C0 is divided internally at 1:3 is a point A01C03, a point at which the line segment A0C0 is divided internally at 1:1 is a point A01C01, a point at which the line segment A0C0 is divided internally at 3:1 is a point A03C01, a point at which the line segment B0D0 is divided internally at 1:3 is a point B01D03, a point at which the line segment B0D0 is divided internally at 1:1 is a point B01D01, a point at which the line segment B0D0 is divided internally at 3:1 is a point B03D01, a point at which the line segment A0C0 is divided internally at 1:7 is a point A01C07, a point at which the line segment A0C0 is divided internally at 1:2 is a point A01C02, a point at which the line segment A0C0 is divided internally at 2:1 is a point A02C01; a point at which the line segment A0C0 is divided internally at 7:1 is a point A07C01, a point at which the line segment B0C0 is divided internally at 1:7 is a point B01D07, a point at which the line segment B0D0 is divided internally at 1:2 is a point B01D02, a point at which the line segment B0D0 is divided internally at 2:1 is a point B02D01, and a point at which the line segment B0D0 is divided internally at 7:1 is a point B07D01.

Pixel values a1b3, a1b1, a3b1, c1d3, c1d1, c3d1, a1c3, a1c1, a3c1, b1d3, b1d1, b3d1, a1c7, a1c2, a2c1, a7c1, b1d7, b1d2, b2d1 and b7d1 of the points A01B03, A01B01, A03B01, C01D03, C01D01, C03D01, A01C03, A01C01, A03C01, B01D03, B01D01, B03D01, A01C07, A01C02, A02C01, A07C01, B01D07, B01D02, B02D01 and B07D01, respectively, are obtained from Expressions (6), (7), (8), (9), (10), (11), (12), (13), (14), (15), (16), (17), (18), (19), (20), (21), (22), (23), (24) and (25), respectively.

[Expression 6]

$$a1b3 = \frac{a0 \times 3 + b0 \times 1}{4} \quad ...(6)$$

[Expression 7]

$$a1b1 = \frac{a0 \times 1 + b0 \times 1}{2} \quad ...(7)$$

[Expression 8]

$$a3b1 = \frac{a0 \times 1 + b0 \times 3}{4} \quad ...(8)$$

[Expression 9]

$$c1d3 = \frac{c0 \times 3 + d0 \times 1}{4} \quad ...(9)$$

[Expression 10]

$$c1d1 = \frac{c0 \times 1 + d0 \times 1}{2} \quad ...(10)$$

[Expression 11]

$$c3d1 = \frac{c0 \times 1 + d0 \times 3}{4} \ldots(11)$$

[Expression 12]

$$a1c3 = \frac{a0 \times 3 + c0 \times 1}{4} \ldots(12)$$

[Expression 13]

$$a1c1 = \frac{a0 \times 1 + c0 \times 1}{2} \ldots(13)$$

[Expression 14]

$$a3c1 = \frac{a0 \times 1 + c0 \times 3}{4} \ldots(14)$$

[Expression 15]

$$b1d3 = \frac{b0 \times 3 + d0 \times 1}{4} \ldots(15)$$

[Expression 16]

$$b1d1 = \frac{b0 \times 1 + d0 \times 1}{2} \ldots(16)$$

[Expression 17]

$$b3d1 = \frac{b0 \times 1 + d0 \times 3}{4} \ldots (17)$$

[Expression 18]

$$a1c7 = \frac{a0 \times 7 + c0 \times 1}{8} \ldots (18)$$

[Expression 19]

$$a1c2 = \frac{a0 \times 2 + c0 \times 1}{3} \ldots (19)$$

[Expression 20]

$$a2c1 = \frac{a0 \times 1 + c0 \times 2}{3} \ldots (20)$$

[Expression 21]

$$a7c1 = \frac{a0 \times 1 + c0 \times 7}{8} \ldots (21)$$

[Expression 22]

$$b1d7 = \frac{b0 \times 7 + d0 \times 1}{8} \ldots (22)$$

**[Expression 23]**

$$b1d2 = \frac{b0 \times 2 + d0 \times 1}{3} ...(23)$$

**[Expression 24]**

$$b2d1 = \frac{b0 \times 1 + d0 \times 2}{3} ...(24)$$

**[Expression 25]**

$$b7d1 = \frac{b0 \times 1 + d0 \times 7}{8} ...(25)$$

The first linear interpolation processing section 42 computes maximum (pixel) values and minimum (pixel) values of intersections (that is, four predetermined points among the points A01B03, A01B01, A03B01, C01D03, C01D01, C03D01, A01C03, A01C01, A03C01, B01D03, B01D01, B03D01, A01C07, A01C02, A02C01, A07C01, B01D07, B01D02, B02D01 and B07D01) of respective sides of the quadrangle defined by the first original pixel group A0, B0, C0 and D0 and a straight line which passes through a representative point (described below) set for each oblique direction pattern and is parallel to the horizontal direction or the vertical direction as the interpolation direction effectiveness discrimination condition (described below), and outputs the interpolation direction effectiveness discrimination condition to the interpolation direction determining section 5.

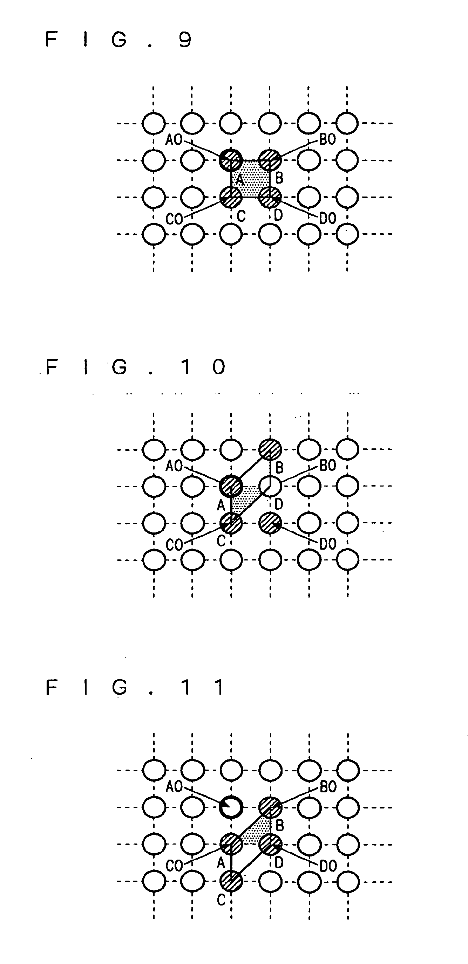

The original pixel data and the interpolation position information outputted from the memory control section 2 are inputted to the interpolation direction determining section 5. The interpolation position information inputted to the interpolation direction determining section 5 from the input terminal 55 is inputted to the oblique direction pattern search section 51. The oblique direction pattern search section 51 searches, in a given area, a plurality of effective oblique direction patterns from the interpolation position information inputted from the input terminal 55. Specific examples thereof are shown in FIGS. 9 to 31.

FIGS. 9 to 31 show an example of a case where the oblique direction pattern is searched from the original pixels for six lines in the horizontal direction and four lines in the vertical direction, thereby performing interpolation processing. There are shown a pattern 0 to a pattern 22, and the pattern 0 is the same as the original pixel (first original pixel group) which is processed by the horizontal/vertical direction interpolation section 4. Note that the range in which the oblique direction pattern is searched is not necessarily limited thereto, and configuration may be made such that the oblique direction pattern is searched from the original pixels for four lines in the horizontal direction and four lines in the vertical direction.

The pattern 1 to the pattern 6 are oblique direction patterns having an oblique slope in the horizontal direction, whereas the pattern 7 to the pattern 22 are oblique direction patterns having an oblique slope in the vertical direction. The reason why a larger number of lines are taken in the horizontal direction is that a case where pixel scanning is performed in the horizontal direction is shown as an example as shown in FIG. 2. In terms of a circuit size, a larger number of lines are easily taken in the pixel scanning direction (horizontal direction in this case) than the line scanning direction (vertical direction in this case). Accordingly, it goes without saying that if the circuit size permits, a larger number of lines may be secured also in the line scanning direction. Points A, B, C and D of each of the oblique direction patterns are referred to as a second original pixel group.

Note that in the pattern 1 to the pattern 6, a line segment AC and a line segment BD are parallel to the vertical direction and a line segment AB and a line segment CD are oblique to the horizontal direction, and that in the pattern 7 to the pattern 22, the line segment AB and the line segment CD are parallel to the horizontal direction and the line segment AC and the line segment BD are oblique to the vertical direction. Accordingly, as described below, there is an advantage that the interpolation coefficient (second interpolation coefficient) is computed with ease in a case where an oblique direction pattern representative value qs is computed by the representative point evaluating section 52 or a case where the interpolation pixel value (second interpolation pixel value) is computed by the oblique direction interpolation section 6.

With reference to FIG. 9, in the case of the pattern 0, the quadrangle defined by the second original pixel group A, B, C and D is the same as the quadrangle defined by the first original pixel group A0, B0, C0 and D0, and thus a range of the interpolation position (x, y) indicating a region in which the quadrangle defined by the second original pixel group A, B, C and D and the quadrangle defined by the first original pixel group A0, B0, C0 and D0 overlap each other is 0≤x<N and 0≤y<N. Therefore, the pattern 0 is judged as a constantly effective oblique direction pattern.

With reference to FIG. 10, in the case of the pattern 1, the point A, the point B, the point C and the point D are the point P (i, j), a point P (i+1, j-1), the point P (i, j+1) and the point P (i+1, j), respectively. The range of the interpolation position (x, y) indicating the region in which the quadrangle defined by the second original pixel group A, B, C and D and the quadrangle defined by the first original pixel group A0, B0, C0 and D0 overlap each other is 0≤x<N, 0≤y<N and y<N-x. If the interpolation position falls within this range, the pattern 1 is judged as an effective oblique direction pattern from the condition for the interpolation position.

With reference to FIG. 11, in the case of the pattern 2, the point A, the point B, the point C and the point D are the point P (i, j+1), the point P (i+1, j), a point P (i, j+2) and the point P (i+1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is 0≤x<N, 0≤y<N and y≥N-x. If the interpolation position falls within this range, the pattern 2 is judged as an effective oblique direction pattern from the condition for the interpolation position.

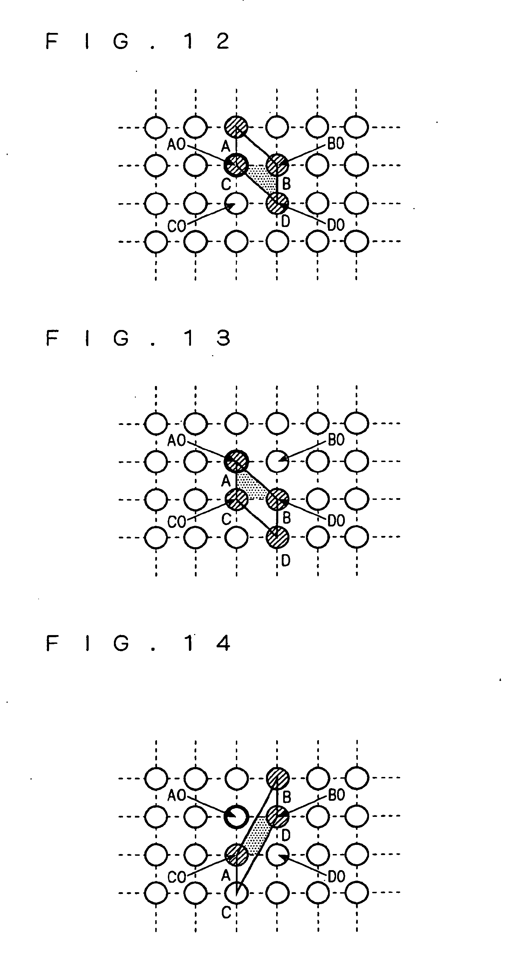

With reference to FIG. 12, in the case of the pattern 3, the point A, the point B, the point C and the point D are a point P (i, j-1), the point P (i+1, j), the point P (i, j) and the point P (i+1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is 0≤x<N, 0≤y<N and y≤x. If the interpolation position falls within this range, the pattern 3 is judged as an effective oblique direction pattern from the condition for the interpolation position.

With reference to FIG. 13, in the case of the pattern 4, the point A, the point B, the point C and the point D are the point P (i, j), the point P (i+1, j+1), the point P (i, j+1) and a point P (i+1, j+2), respectively. The range of the interpolation position (x, y) indicating the region in which the quadrangle defined by the second original pixel group A, B, C and D and the quadrangle defined by the first original pixel group A0, B0, C0 and D0 overlap each other is 0≤x<N, 0≤y<N and y>x. If the interpolation position falls within this range, the pattern 4 is judged as an effective oblique direction pattern from the condition for the interpolation position.

With reference to FIG. 14, in the case of the pattern 5, the point A, the point B, the point C and the point D are the point P (i, j+1), the point P (i+1, j-1), the point P (i, j+2) and the point P (i+1, j), respectively. The range of the interpolation position (x, y) indicating the region in which the quadrangle defined by the second original pixel group A, B, C and D and the quadrangle defined by the first original pixel group A0, B0, C0 and D0 overlap each other is 0≤x<N, 0≤y<N, y≥N-2x and y≤2N-2x. If the interpolation position falls within this range, the pattern 5 is judged as an effective oblique direction pattern from the condition for the interpolation position.

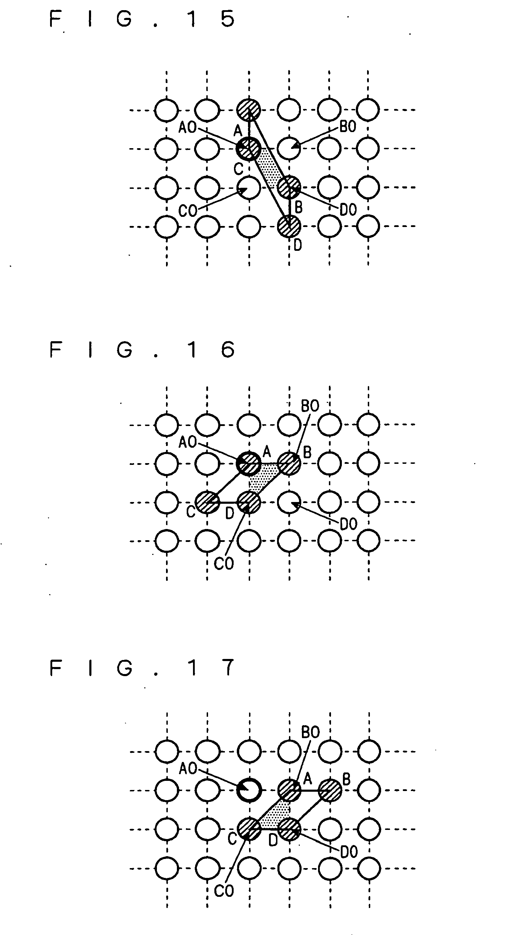

] With reference to FIG. 15, in the case of the pattern 6, the point A, the point B, the point C and the point D are the point P (i, j-1), the point P (i+1, j+1), the point P (i, j) and the point P (i+1, j+2), respectively. The range of the interpolation position (x, y) indicating the region in which the quadrangle defined by the second original pixel group A, B, C and D and the quadrangle defined by the first original pixel group A0. B0, C0 and D0 overlap each other is 0≤x<N, 0≤y<N, y≤2x and y≥2x-N. If the interpolation position falls within this range, the pattern 6 is judged as an effective oblique direction pattern from the condition for the interpolation position.

With reference to FIG. 16, in the case of the pattern 7, the point A, the point B, the point C and the point D are the point P (i, j), the point P (i+1, j), a point P (i-1, j+1) and the point P (i, j+1), respectively. The range of the interpolation position (x, y) indicating the region in which the quadrangle defined by the second original pixel group A, B, C and D and the quadrangle defined by the first original pixel group A0, B0, C0 and D0 overlap each other is 0<x<N, 0≤y<N and y<N-x. If the interpolation position falls within this range, the pattern 7 is judged as an effective oblique direction pattern from the condition for the interpolation position.

With reference to FIG. 17, in the case of the pattern 8, the point A, the point B, the point C and the point D are the point P (i+1, j), a point P (i+2, j), the point P (i, j+1) and the point P (i+1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$ and $y \geq N-x$. If the interpolation position falls within this range, the pattern 8 is judged as an effective oblique direction pattern from the condition for the interpolation position.

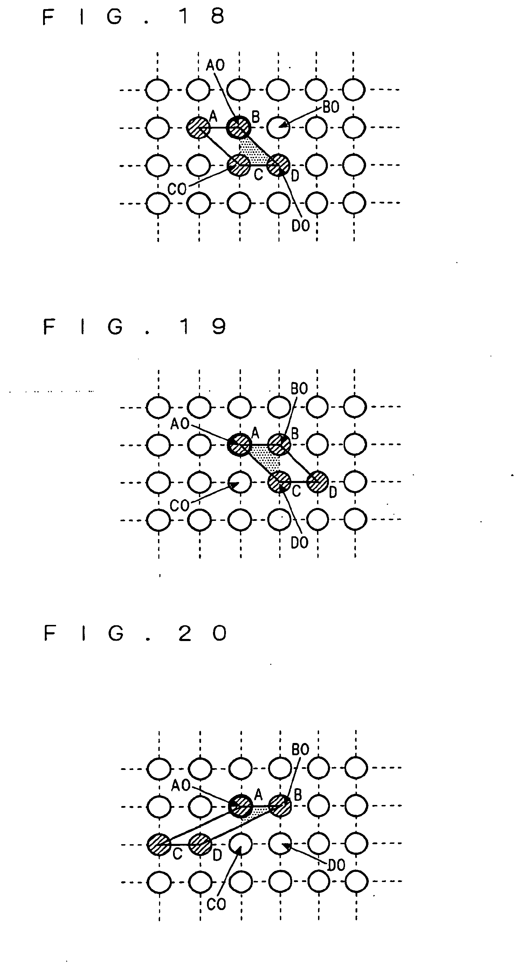

With reference to FIG. 18, in the case of the pattern 9, the point A, the point B, the point C and the point D are a point P (i-1, j), the point P (i, j), the point P (i, j+1) and the point P (i+1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$ and $y > x$. If the interpolation position falls within this range, the pattern 9 is judged as an effective oblique direction pattern from the condition for the interpolation position.

With reference to FIG. 19, in the case of the pattern 10, the point A, the point B, the point C and the point D are the point P (i, j), the point P (i+1, j), the point P (i+1, j+1) and a point P (i+2, j+1), respectively. The range of the interpolation position (x, y) indicating the region in which the quadrangle defined by the second original pixel group A, B, C and D and the quadrangle defmed by the first original pixel group A0, B0, C0 and D0 overlap each other is $0 \leq x < N$, $0 \leq y < N$ and $y \leq x$. If the interpolation position falls within this range, the pattern 10 is judged as an effective oblique direction pattern from the condition for the interpolation position.

With reference to FIG. 20, in the case of the pattern 11, the point A, the point B, the point C and the point D are the point P (i, j), the point P (i+1, j), a point P (i-2, j+1) and the point P (i-1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$ and $y < (N-x)/2$. If the interpolation position falls within this range, the pattern I is judged as an effective oblique direction pattern from the condition for the interpolation position.

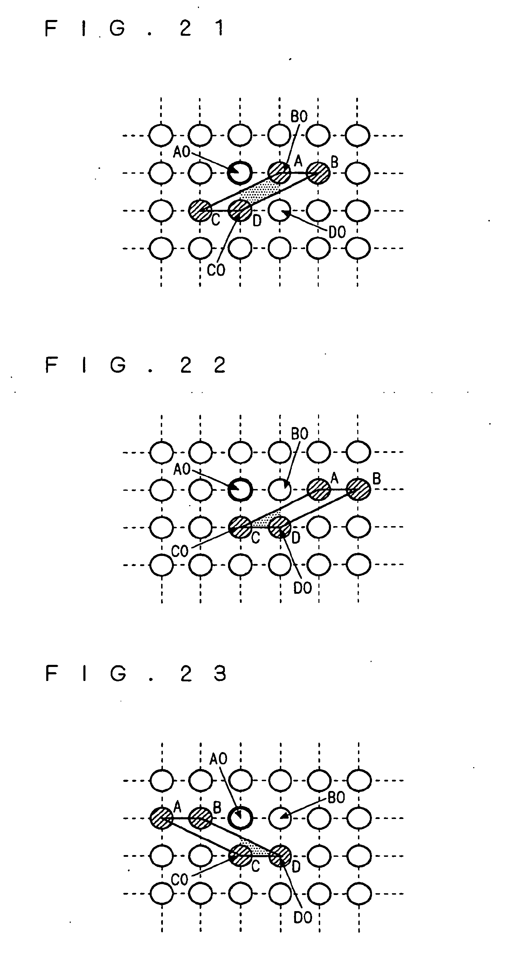

With reference to FIG. 21, in the case of the pattern 12, the point A, the point B, the point C and the point D are the point P (i+1, j), the point P (i+2, j), the point P (i-1, j+1) and the point P (i, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y \geq (N-x)/2$ and $y < (2N-x)/2$. If the interpolation position falls within this range, the pattern 12 is judged as an effective oblique direction pattern from the condition for the interpolation position.

With reference to FIG. 22, in the case of the pattern 13, the point A, the point B, the point C and the point D are the point P (i+2, j), a point P (i+3, j), the point P (i, j+1) and the point P (i+1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$ and $y \geq (2N-x)/2$. If the interpolation position falls within this range, the pattern 13 is judged as an effective oblique direction pattern from the condition for the interpolation position.

With reference to FIG. 23, in the case of the pattern 14, the point A, the point B, the point C and the point D are a point P (i-2, j), the point P (i-1, j), the point P (i, j+1) and the point P (i+1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$ and $y \geq (N+x)/2$. If the interpolation position falls within this range, the pattern 14 is judged as an effective oblique direction pattern from the condition for the interpolation position.

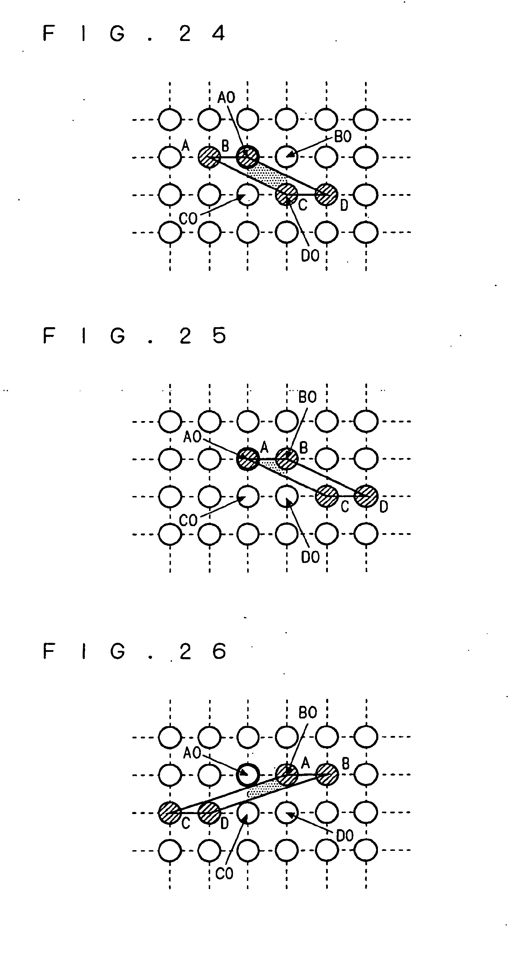

With reference to FIG. 24, in the case of the pattern 15, the point A, the point B, the point C and the point D are the point P (i-1, j), the point P (i, j), the point P (i+1, j+1) and the point P (i+2. j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y < (N+x)/2$ and $y \geq x/2$. If the interpolation position falls within this range, the pattern 15 is judged as an effective oblique direction pattern from the condition for the interpolation position.

With reference to FIG. 25, in the case of the pattern 16, the point A, the point B, the point C and the point D are the point P (i, j), the point P (i+1, j), the point P (i+2, j+1) and a point P (i+3, j+1), respectively. The range of the interpolation, position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$ and $y < x/2$. If the interpolation position falls within this range, the pattern 16 is judged as an effective oblique direction pattern from the condition for the interpolation position.

With reference to FIG. 26, in the case of the pattern 17, the point A, the point B, the point C and the point D are the point P (i+1, j), the point P (i+2, j), the point P (i-2, j+1) and the point P (i-1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y \geq (N-x)/3$ and $y < (2N-x)/3$. If the interpolation position falls within this range, the pattern 17 is judged as an effective oblique direction pattern from the condition for the interpolation position.

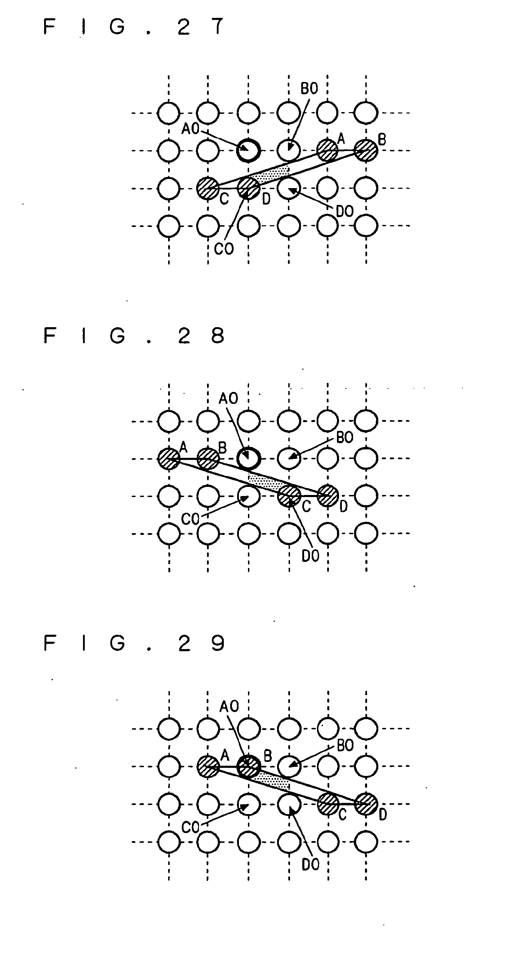

With reference to FIG. 27, in the case of the pattern 18, the point A, the point B, the point C and the point D are the point P (i+2, j), the point P (i+3, j), the point P (i-1. j+1) and the point P (i, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y \geq (2N-x)/3$ and $y < (3N-x)/3$. If the interpolation position falls within this range, the pattern 18 is judged as an effective oblique direction pattern from the condition for the interpolation position.

With reference to FIG. 28, in the case of the pattern 19, the point A, the point B, the point C and the point D are the point P (i-2, j), the point P (i-1, j), the point P (i+1, j+1) and the point P (i+2, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y \geq (N+x)/3$ and $y < (2N+x)/3$. If the interpolation position falls within this range, the pattern 19 is judged as an effective oblique direction pattern from the condition for the interpolation position.

With reference to FIG. 29, in the case of the pattern 20, the point A, the point B, the point C and the point D are the point P (i-1, j), the point P (i, j), the point P (i+2, j+1) and the point P (i+3, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y \geq x/3$ and $y < (N+x)/3$. If the interpolation position falls within this range, the pattern 20 is judged as an effective oblique direction pattern from the condition for the interpolation position.

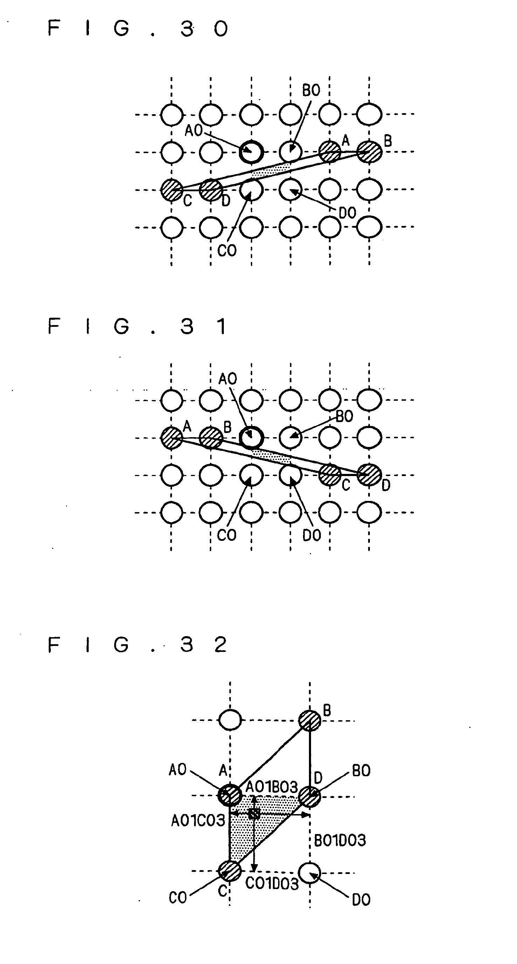

With reference to FIG. 30, in the case of the pattern 21, the point A, the point B, the point C and the point D are the point P (i+2, j), the point P (i+3, j), the point P (i-2. j+1) and the point P (i-1, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y \geq (2N-x)/4$ and $y \leq (3N-x)/4$. If the interpolation position falls within this range, the pattern 21 is judged as an effective oblique direction pattern from the condition for the interpolation position.

With reference to FIG. 31, in the case of the pattern 22, the point A, the point B, the point C and the point D are the point P (i-2, j), the point P (i-1, j), the point P (i+2, j+1) and the point P (i+3, j+1), respectively. The range of the interpolation position (x, y) indicating the region in which the quadrangle defined by the second original pixel group A, B, C and D and the quadrangle defined by the first original pixel group A0, B0, C0 and D0 overlap each other is $0 \leq x < N$, $0 \leq y < N$, $y \geq (N+x)/4$ and $y \leq (2N+x)/4$. If the interpolation position falls within this range, the pattern 22 is judged as an effective oblique direction pattern from the condition for the interpolation position.

Note that, on the condition for the interpolation position in order to judge an effective oblique direction pattern from the quadrangle defined by the second original pixel group A, B, C and D and the quadrangle defined by the first original pixel group A0, B0, C0 and D0, which of the oblique direction patterns includes a boundary between the oblique direction patterns is not necessarily limited to the above. Specifically, the condition for the pattern 3 and the pattern 4 are $y \leq x$ and $y > x$, respectively, in the above, but the condition for the pattern 3 and the pattern 4 may be $y < x$ and $y \geq x$, respectively. Further, the condition for the pattern 5 are $y \geq N-2x$ and $y \leq 2N-2x$, but may be $y > N-2x$ and $y < 2N-2x$.

The first oblique direction pattern information outputted from the oblique direction pattern search section 51 is inputted to the representative point evaluating section 52. The representative point evaluating section 52 judges, as to the oblique direction pattern which has been judged as effective by the oblique direction pattern search section 51, effectiveness/ineffectiveness of the oblique direction pattern from the oblique direction pattern representative value qs of the representative point. Note that arithmetic operation may be simplified by using a representative point with a simple internal division ratio.

The representative point in each of the oblique direction patterns will be described with reference to FIGS. 32 to 53. The representative point is positioned, in the part in which the quadrangle defined by the second original pixel group A, B, C and D overlaps the quadrangle defined by the first original pixel group A0, B0, C0 and D0, at a position as close to a center (or barycenter) thereof as possible. In order to reduce an arithmetic operation amount, a point with a simple internal division ratio is selected.

With reference to FIG. 32, in the pattern 1, a position indicated by a quadrangle (□), at which the quadrangle defined by the first original pixel group A0, B0, C0 and D0 is divided internally at 1:3 in the horizontal direction and at 1:3 in the vertical direction, is a representative point. When the oblique direction pattern representative value qs falls within a minimum/maximum range of a pixel value (alb3) of the point A01B03 at which the line segment A0B0 is divided internally at 1:3, a pixel value (cld3) of the point C01D03 at which the line segment C0D0 is divided internally at 1:3, a pixel value (alc3) of the point A01C03 at which the line segment A0C0 is divided internally at 1:3, and a pixel value (bld3) of the point B01D03 at which the line segment B0D0 is divided internally at 1:3, that is, when min (a1b3, c1d3, a1c3, b1d3) $\leq$ qs $\leq$ max (a1b3, c1d3, a1c3, b1d3), the pattern 1 is judged as an effective oblique direction pattern from the condition for the oblique direction pattern representative value qs.

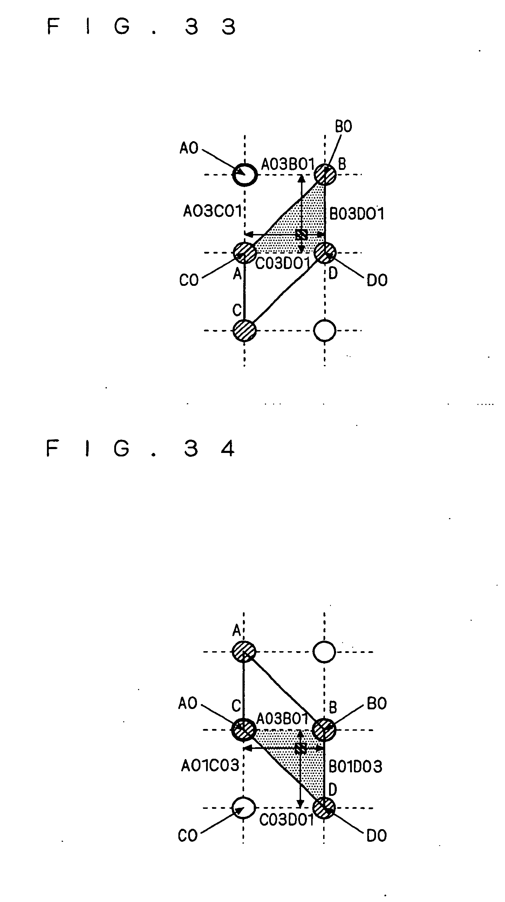

With reference to FIG. 33, in the pattern 2, a position indicated by a quadrangle (□), at which the quadrangle defined by the first original pixel group A0, B0, C0 and D0 is divided internally at 3:1 in the horizontal direction and at 3:1 in the vertical direction, is a representative point. When the oblique direction pattern representative value qs falls within a minimum/maximum range of a pixel value (a3b1) of the point A03B01 at which the line segment A0B0 is divided internally at 3:1, a pixel value (c3d1) of the point C03D01 at which the line segment C0D0 is divided internally at 3:1, a pixel value (a3c1) of the point A03C01 at which the line segment A0C0 is divided internally at 3:1, and a pixel value (b3d1) of the point B03D01 at which the line segment B0D0 is divided internally at 3:1, that is, when min (a3b1, c3d1, a3c1, b3d1) $\leq$ qs $\leq$ max (a3b1, c3d1, a3c1, b3d1), the pattern 2 is judged as an effective oblique direction pattern from the condition for the oblique direction pattern representative value qs.

With reference to FIG. 34, in the pattern 3, a position indicated by a quadrangle ($\square$), at which the quadrangle defined by the first original pixel group A0, B0, C0 and D0 is divided internally at 3:1 in the horizontal direction and at 1:3 in the vertical direction, is a representative point. When the oblique direction pattern representative value qs falls within a minimum/maximum range of the pixel value (a3bl) of the point A03B01 at which the line segment A0B0 is divided internally at 3:1, the pixel value (c3dl) of the point C03D01 at which the line segment C0D0 is divided internally at 3:1, the pixel value (a1c3) of the point A01C03 at which the line segment A0C0 is divided internally at 1:3, and the pixel value (b1d3) of the point B01D03 at which the line segment B0D0 is divided internally at 1:3, that is, when min (a3b1, c3d1, a1c3, b1d3) $\leq$ qs $\leq$ max (a3b1, c3d1, a1c3, b1d3), the pattern 3 is judged as an effective oblique direction pattern from the condition for the oblique direction pattern representative value qs.

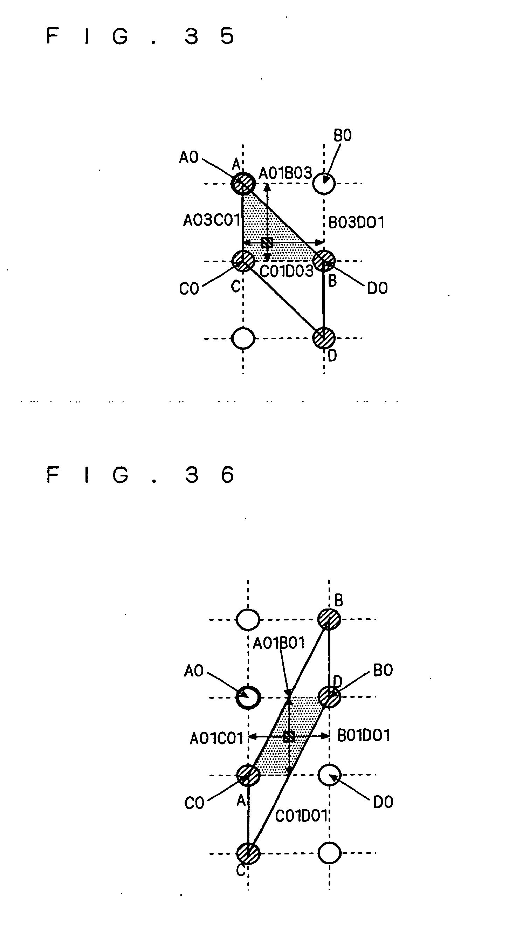

With reference to FIG. 35, in the pattern 4, a position indicated by a quadrangle ($\square$), at which the quadrangle defined by the first original pixel group A0, B0, C0 and D0 is divided internally at 1:3 in the horizontal direction and at 3:1 in the vertical direction, is a representative point. When the oblique direction pattern representative value qs falls within a minimum/maximum range of the pixel value (alb3) of the point A01B03 at which the line segment A0B0 is divided internally at 1:3, the pixel value (cld3) of the point C01D03 at which the line segment C0D0 is divided internally at 1:3, the pixel value (a3c1) of the point A03C01 at which the line segment A0C0 is divided internally at 3:1, and the pixel value (b3d1) of the point B03D01 at which the line segment B0D0 is divided internally at 3:1, that is, when min (a1b3, c1d3, a3c1, b3d1) $\leq$ qs $\leq$ max (a1b3, c1d3, a3c1, b3d1), the pattern 4 is judged as an effective oblique direction pattern from the condition for the oblique direction pattern representative value qs.

With reference to FIG. 36, in the pattern 5, a position indicated by a quadrangle ($\square$), at which the quadrangle defined by the first original pixel group A0, B0, C0 and D0 is divided internally at 1:1 in the horizontal direction and at 1:1 in the vertical direction, is a representative point. When the oblique direction pattern representative value qs falls within a minimum/maximum range of a pixel value (a1b1) of the point A01B01 at which the line segment A0B0 is divided internally at 1:1, a pixel value (c1d1) of the point C01D01 at which the line segment C0D0 is divided internally at 1:1, a pixel value (a1c1) of the point A01 C01 at which the line segment A0C0 is divided internally at 1:1, and a pixel value (b1d1) of the point B01D01 at which the line segment B0D0 is divided internally at 1:1, that is, when min (a1b1, c1d1, a1c1,b1d1) $\leq$ qs $\leq$ max (a1b1, c1d1, a1c1, b1d1), the pattern 5 is judged as an effective oblique direction pattern from the condition for the oblique direction pattern representative value qs.

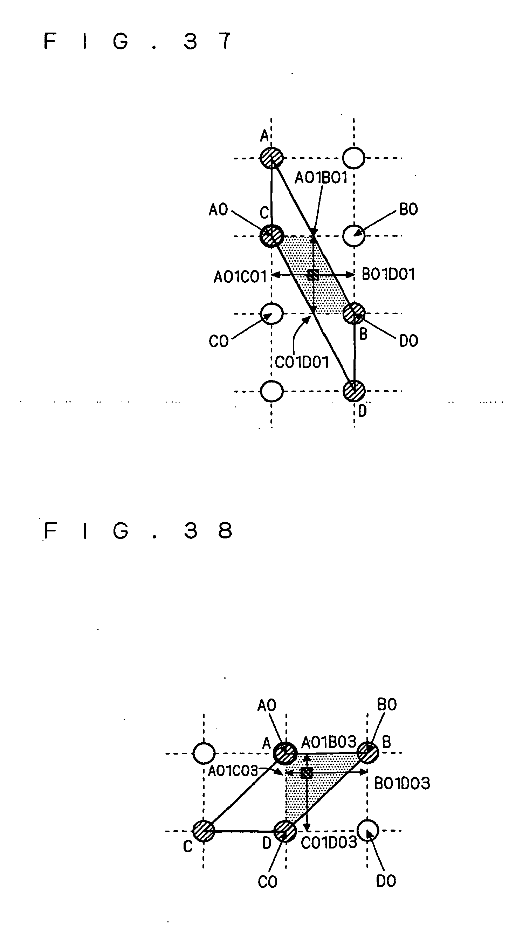

With reference to FIG. 37, in the pattern 6, the position indicated by the quadrangle ($\square$), at which the quadrangle defined by the first original pixel group A0, B0, C0 and D0 is divided internally at 1:1 in the horizontal direction and at 1:1 in the vertical direction, is a representative point. When the oblique direction pattern representative value qs falls within the minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, the pixel value (a1c1) of the point A01C01 at which the line segment A0C0 is divided internally at 1:1, and the pixel value (b1d1) of the point B01D01 at which the line segment B0D0 is divided internally at 1:1, that is, when min (a1b1, c1d1, a1c1,b1d1) $\leq$ qs $\leq$ max (a1b1, c1d1, a1c1, b1d1), the pattern 6 is judged as an effective oblique direction pattern from the condition for the oblique direction pattern representative value qs.

With reference to FIG. 38, in the pattern 7, the position indicated by the quadrangle ($\square$), at which the quadrangle defined by the first original pixel group A0, B0, C0 and D0 is divided internally at 1:3 in the horizontal direction and at 1:3 in the vertical direction, is a representative point. When the oblique direction pattern representative value qs falls within the minimum/maximum range of the pixel value (a1b3) of the point A01B03 at which the line segment A0B0 is divided internally at 1:3, the pixel value (c1d3) of the point C01D03 at which the line segment C0D0 is divided internally at 1:3, the pixel value (a1c3) of the point A01C03 at which the line segment A0C0 is divided internally at 1:3, and the pixel value (b1d3) of the point B01D03 at which the line segment B0D0 is divided internally at 1:3, that is, when min (a1b3, c1d3, a1c3, b1d3) $\leq$ qs $\leq$ max (a1b3, c1d3, a1c3, b1d3), the pattern 7 is judged as an effective oblique direction pattern from the condition for the oblique direction pattern representative value qs.

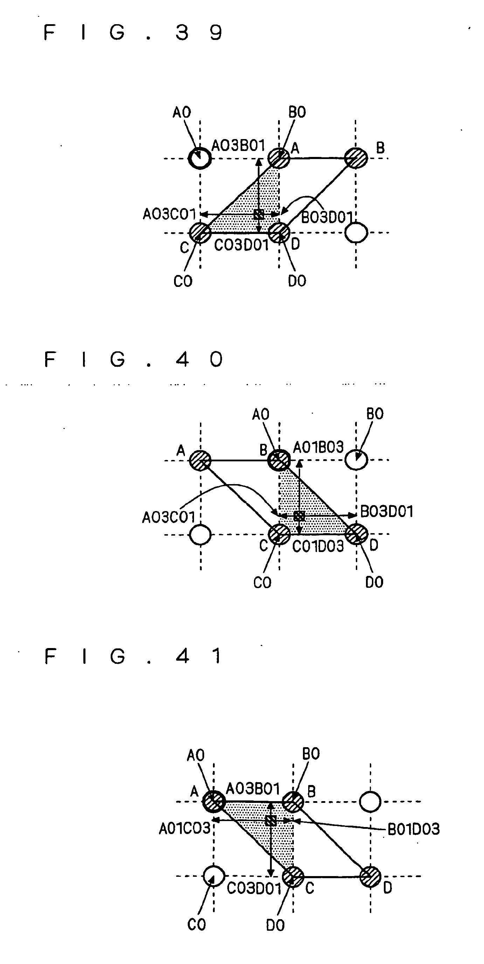

With reference to FIG. 39, in the pattern 8, the position indicated by the quadrangle ($\square$), at which the quadrangle defined by the first original pixel group A0 B0, C0 and D0 is divided internally at 3:1 in the horizontal direction and at 3:1 in the vertical direction, is a representative point. When the oblique direction pattern representative value qs falls within the minimum/maximum range of the pixel value (a3b1) of the point A03B01 at which the line segment A0B0 is divided internally at 3:1, the pixel value (c3d1) of the point C03D01 at which the line segment C0D0 is divided internally at 3:1, the pixel value (a3c1) of the point A03C01 at which the line segment A0C0 is divided internally at 3:1, and the pixel value (b3d1) of the point B03D01 at which the line segment B0D0 is divided internally at 3:1, that is, when min (a3b1, c3d1,

a3c1, b3d1) $\leq$ qs $\leq$ max (a3b1, c3d1, a3c1, b3d1), the pattern 8 is judged as an effective oblique direction pattern from the condition for the oblique direction pattern representative value qs.

With reference to FIG. 40, in the pattern 9, the position indicated by the quadrangle (□), at which the quadrangle defined by the first original pixel group A0, B0, C0 and D0 is divided internally at 1:3 in the horizontal direction and at 3:1 in the vertical direction, is a representative point. When the oblique direction pattern representative value qs falls within the minimum/maximum range of the pixel value (alb3) of the point A01B03 at which the line segment A0B0 is divided internally at 1:3, the pixel value (cld3) of the point C01D03 at which the line segment C0D0 is divided internally at 1:3, the pixel value (a3c1) of the point A03C01 at which the line segment A0C0 is divided internally at 3:1, and the pixel value (b3d1) of the point B03D01 at which the line segment B0D0 is divided internally at 3:1, that is, when min (a1b3, c1d3, a3c1, b3d1) $\leq$ qs $\leq$ max (a1b3, c1d3, a3c1, b3d1), the pattern 9 is judged as an effective oblique direction pattern from the condition for the oblique direction pattern representative value qs.

With reference to FIG. 41, in the pattern 10, the position indicated by the quadrangle (□), at which the quadrangle defined by the first original pixel group A0, B0, C0 and D0 is divided internally at 3:1 in the horizontal direction and at 1:3 in the vertical direction, is a representative point. When the oblique direction pattern representative value qs falls within the minimum/maximum range of the pixel value (a3b1) of the point A03B01 at which the line segment A0B0 is divided internally at 3:1, the pixel value (c3d1) of the point C03D01 at which the line segment C0D0 is divided internally at 3:1, the pixel value (a1c3) of the point A01C03 at which the line segment A0C0 is divided internally at 1:3, and the pixel value (b1d3) of the point B01D03 at which the line segment B0D0 is divided internally at 1:3, that is, when min (a3b1, c3d1, a1c3, b1d3) $\leq$ qs $\leq$ max (a3b1, c3d1, a1c3, b1d3), the pattern 10 is judged as an effective oblique direction pattern from the condition for the oblique direction pattern representative value qs.

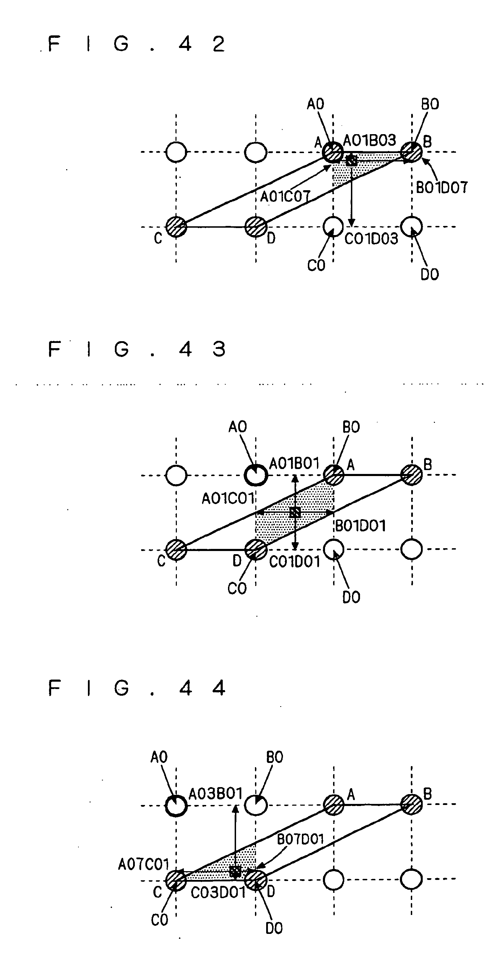

With reference to FIG. 42, in the pattern 11, a position indicated by a quadrangle (□), at which the quadrangle defined by the first original pixel group A0, B0, C0 and D0 is divided internally at 1:3 in the horizontal direction and at 1:7 in the vertical direction, is a representative point. When the oblique direction pattern representative value qs falls within a minimum/maximum range of the pixel value (alb3) of the point A01B03 at which the line segment A0B0 is divided internally at 1:3, the pixel value (c1d3) of the point C01D03 at which the line segment C0D0 is divided internally at 1:3, a pixel value (a1c7) of the point A01C07 at which the line segment A0C0 is divided internally at 1:7, and a pixel value (b1d7) of the point B01D07 at which the line segment B0D0 is divided internally at 1:7, that is, when min (a1b3, c1d3, a1c7, b1d7) $\leq$ qs $\leq$ max (a1b3, c1d3, a1c7, b1d7), the pattern 11 is judged as an effective oblique direction pattern from the condition for the oblique direction pattern representative value qs.

With reference to FIG. 43, in the pattern 12, the position indicated by the quadrangle (□), at which the quadrangle defined by the first original pixel group A0, B0, C0 and D0 is divided internally at 1:1 in the horizontal direction and at 1:1 in the vertical direction, is a representative point. When the oblique direction pattern representative value qs falls within the minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, the pixel value (a1c1) of the point A01C01 at which the line segment A0C0 is divided internally at 1:1, and the pixel value (b1d1) of the point B01D01 at which the line segment B0D0 is divided internally at 1:1, that is, when min (a1b1, c1d1, a1c1, b1d1) $\leq$ qs $\leq$ max (a1b1, c1d1, a1c1, b1d1), the pattern 12 is judged as an effective oblique direction pattern from the condition for the oblique direction pattern representative value qs.

With reference to FIG. 44, in the pattern 13, a position indicated by a quadrangle (□), at which the quadrangle defined by the first original pixel group A0, B0, C0 and D0 is divided internally at 3:1 in the horizontal direction and at 7:1 in the vertical direction, is a representative point. When the oblique direction pattern representative value qs falls within a minimum/maximum range of the pixel value (a3b1) of the point A03B01 at which the line segment A0B0 is divided internally at 3:1, the pixel value (c3dl) of the point C03D01 at which the line segment C0D0 is divided internally at 3:1, a pixel value (a7c1) of the point A07C01 at which the line segment A0C0 is divided internally at 7:1, and a pixel value (b7d1) of the point B07D01 at which the line segment B0D0 is divided internally at 7:1, that is, when min (a3b1, c3d1, a7c1, b7d1) $\leq$ qs $\leq$ max (a3b1, c3d1, a7c1; b7d1), the pattern 13 is judged as an effective oblique direction pattern from the condition for the oblique direction pattern representative value qs.

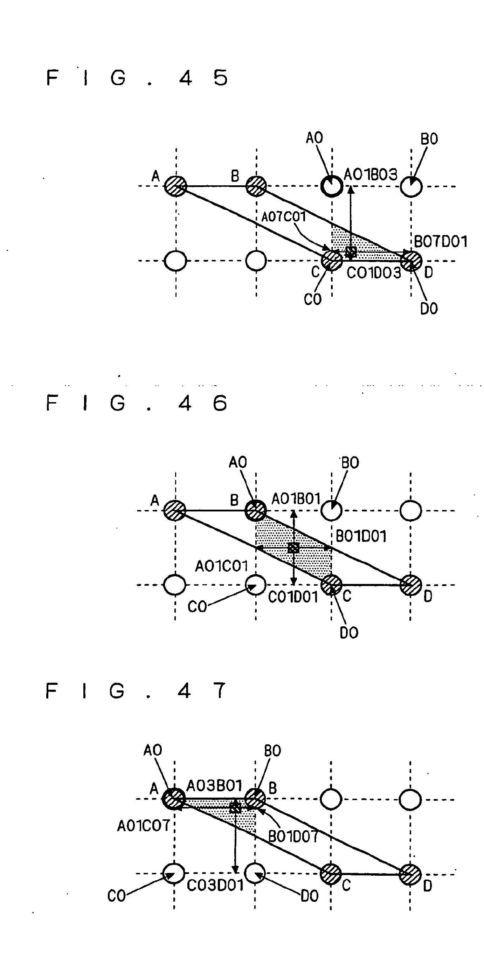

With reference to FIG. 45, in the pattern 14, a position indicated by a quadrangle (□), at which the quadrangle defined by the first original pixel group A0, B0, C0 and D0 is divided internally at 1:3 in the horizontal direction and at 7:1 in the vertical direction, is a representative point. When the oblique direction pattern representative value qs falls within a minimum/maximum range of the pixel value (alb3) of the point A01B03 at which the line segment A0B0 is divided internally at 1:3, the pixel value (c1d3) of the point C01D03 at which the line segment C0D0 is divided internally at 1:3, the pixel value (a7c1) of the point A07C01 at which the line segment A0C0 is divided internally at 7:1, and the pixel value (b7d1) of the point B07D01 at which the line segment B0D0 is divided internally at 7:1, that is, when min (a1b3, c1d3, a7c1, b7d1) $\leq$ qs $\leq$ max (a1b3, c1d3, a7c1, b7d1), the pattern 14 is judged as an effective oblique direction pattern from the condition for the oblique direction pattern representative value qs.

With reference to FIG. 46, in the pattern 15, the position indicated by the quadrangle (□), at which the quadrangle defined by the first original pixel group A0, B0, C0 and D0 is divided internally at 1:1 in the horizontal direction and at 1:

1 in the vertical direction, is a representative point. When the oblique direction pattern representative value qs falls within the minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, the pixel value (a1c1) of the point A01C01 at which the line segment A0C0 is divided internally at 1:1, and the pixel value (b1d1) of the point B01D01 at which the line segment B0D0 is divided internally at 1:1, that is, when min (a1b1, c1d1, a1c1, b1d1) ≤ qs ≤ max (a1b1, c1d1, a1c1, b1d1), the pattern 15 is judged as an effective oblique direction pattern from the condition for the oblique direction pattern representative value qs.

With reference to FIG. 47, in the pattern 16, a position indicated by a quadrangle (□), at which the quadrangle defined by the first original pixel group A0, B0, C0 and D0 is divided internally at 3:1 in the horizontal direction and at 1:7 in the vertical direction, is a representative point. When the oblique direction pattern representative value qs falls within a minimum/maximum range of the pixel value (a3b1) of the point A03B01 at which the line segment A0B0 is divided internally at 3:I, the pixel value (c3d1) of the point C03D01 at which the line segment C0D0 is divided internally at 3:1, the pixel value (a1c7) of the point A01C07 at which the line segment A0C0 is divided internally at 1:7, and the pixel value (b1d7) of the point B01D07 at which the line segment B0D0 is divided internally at 1:7, that is, when min (a3b1, c3d1, a1c7, b1d7) ≤ qs ≤ max (a3b1, c3d1, a1c7, b1d7), the pattern 16 is judged as an effective oblique direction pattern from the condition for the oblique direction pattern representative value qs.

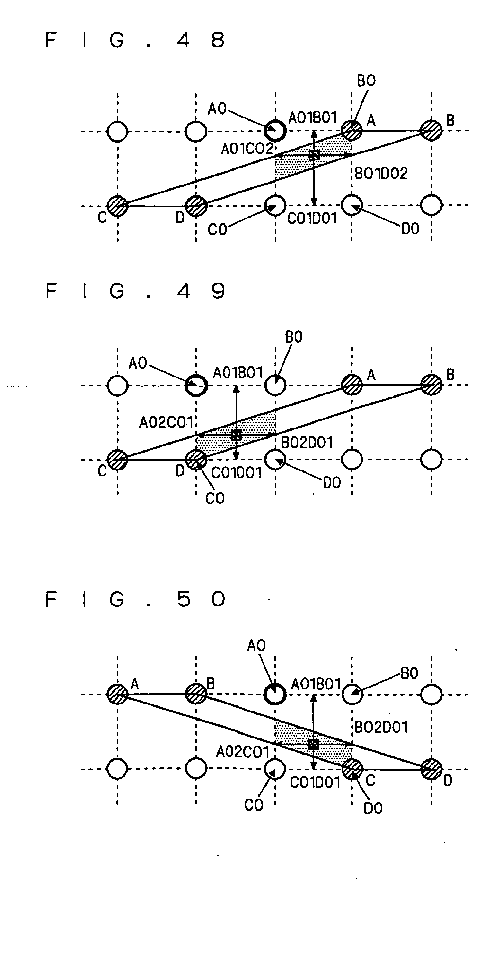

With reference to FIG. 48, in the pattern 17, a position indicated by a quadrangle (□), at which the quadrangle defined by the first original pixel group A0, B0, C0 and D0 is divided internally at 1:1 in the horizontal direction and at 1:2 in the vertical direction, is a representative point. When the oblique direction pattern representative value qs falls within a minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, a pixel value (a1c2) of the point A01C02 at which the line segment A0C0 is divided internally at 1:2, and a pixel value (b1d2) of the point B01D02 at which the line segment B0D0 is divided internally at 1:2, that is, when min (a1b1, c1d1, a1c2, b1d2) ≤ qs ≤ max (a1b1, c1d1, a1c2, b1d2), the pattern 17 is judged as an effective oblique direction pattern from the condition for the oblique direction pattern representative value qs.

With reference to FIG. 49, in the pattern 18, a position indicated by a quadrangle (□), at which the quadrangle defined by the first original pixel group A0, B0, C0 and D0 is divided internally at 1:1 in the horizontal direction and at 2:1 in the vertical direction, is a representative point. When the oblique direction pattern representative value qs falls within a minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, a pixel value (a2c1) of the point A02C01 at which the line segment A0C0 is divided internally at 2:1, and a pixel value (b2d1) of the point B02D01 at which the line segment B0D0 is divided internally at 2:1, that is, when min (a1b1, c1d1, a2c1, b2d1) ≤ qs ≤ max (a1b1, c1d1, a2c1, b2d1), the pattern 18 is judged as an effective oblique direction pattern from the condition for the oblique direction pattern representative value qs.

With reference to FIG. 50, in the pattern 19, the position indicated by the quadrangle (□), at which the quadrangle defined by the first original pixel group A0, B0, C0 and D0 is divided internally at 1:1 in the horizontal direction and at 2:1 in the vertical direction, is a representative point. When the oblique direction pattern representative value qs falls within the minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, the pixel value (a2c1) of the point A02C01 at which the line segment A0C0 is divided internally at 2:1, and the pixel value (b2d1) of the point B02D01 at which the line segment B0D0 is divided internally at 2:1, that is, when min (a1b1,c1d1, a2c1, b2d1) ≤ qs ≤ max (a1b1, c1d1, a2c1, b2d1), the pattern 19 is judged as an effective oblique direction pattern from the condition for the oblique direction pattern representative value qs.

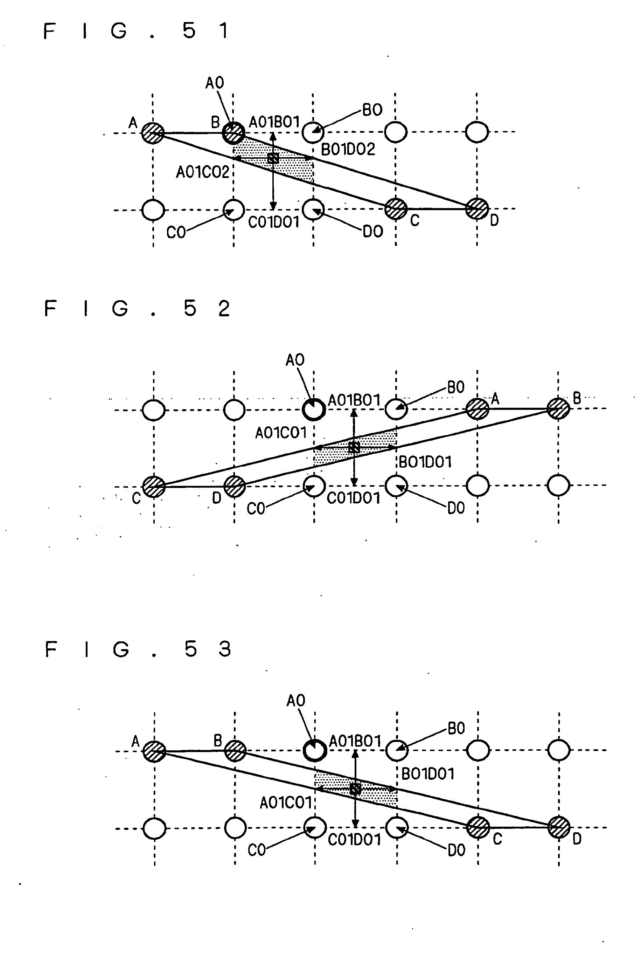

With reference to FIG. 51, in the pattern 20, the position indicated by the quadrangle (□), at which the quadrangle defined by the first original pixel group A0, B0, C0 and D0 is divided internally at 1:1 in the horizontal direction and at 1:2 in the vertical direction, is a representative point. When the oblique direction pattern representative value qs falls within the minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, the pixel value (a1c2) of the point A01C02 at which the line segment A0C0 is divided internally at 1:2, and the pixel value (b1d2) of the point B01D02 at which the line segment B0D0 is divided internally at 1:2, that is, when min (a1b1, c1d1, a1c2, b1d2) ≤ qs ≤ max (a1b1, c1d1, a1c2, b1d2), the pattern 20 is judged as an effective oblique direction pattern from the condition for the oblique direction pattern representative value qs.

With reference to FIG. 52, in the pattern 21, the position indicated by the quadrangle (□), at which the quadrangle defined by the first original pixel group A0, B0, C0 and D0 is divided internally at 1:1 in the horizontal direction and at 1:1 in the vertical direction, is a representative point. When the oblique direction pattern representative value qs falls within the minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, the pixel value (a1c1) of the point A01C01 at which the line segment A0C0 is divided internally at 1:1, and the pixel value (b1d1) of the point B01D01 at which the line segment B0D0 is divided internally at 1:1, that is, when min (a1b1, c1d1, a1c1, b1d1) ≤ qs ≤ max (a1b1, c1d1, a1c1, b1d1), the pattern 21 is judged as an effective oblique direction pattern from the condition for the oblique direction pattern representative value qs.

With reference to FIG. 53, in the pattern 22, the position indicated by the quadrangle (□), at which the quadrangle defined by the first original pixel group A0, B0, C0 and D0 is divided internally at 1:1 in the horizontal direction and at 1: 1 in the vertical direction, is a representative point. When the oblique direction pattern representative value qs falls within the minimum/maximum range of the pixel value (a1b1) of the point A01B01 at which the line segment A0B0 is divided internally at 1:1, the pixel value (c1d1) of the point C01D01 at which the line segment C0D0 is divided internally at 1:1, the pixel value (a1c1) of the point A01C01 at which the line segment A0C0 is divided internally at 1:1, and the pixel value (b1d1) of the point B01D01 at which the line segment B0D0 is divided internally at 1:1, that is, when min (a1b1, c1d1, a1c1, b1d1) ≤ qs ≤ max (a1b1, c1d1, a1c1, b1d1), the pattern 22 is judged as an effective oblique direction pattern from the condition for the oblique direction pattern representative value qs.

The representative point in each of the oblique direction patterns is not limited thereto, and a representative point which is as close to the interpolation position as possible is desirably selected in a case where the arithmetic operation is still available.

Next, description will be given of a method of computing, by the representative point evaluating section 52, the oblique direction pattern representative value qs from the representative point. The oblique direction pattern representative value qs is obtained from Expression (26) using pixel values a, b, c and d of the second original pixel group A, B, C and D, respectively, if the interpolation coefficient is us:N-us (0≤us<N) in the horizontal direction and vs:N-vs (0≤vs<N) in the vertical direction. Note that the interpolation coefficient varies in accordance with a position (xs, ys) (0≤xs<N, 0≤ys<N) of the representative point and the oblique direction pattern.

[Expression 26]

$$qs = \frac{\{a \times (N - us) + b \times us\} \times (N - vs) + \{c \times (N - us) + d \times us\} \times vs}{N \times N} \quad \ldots(26)$$

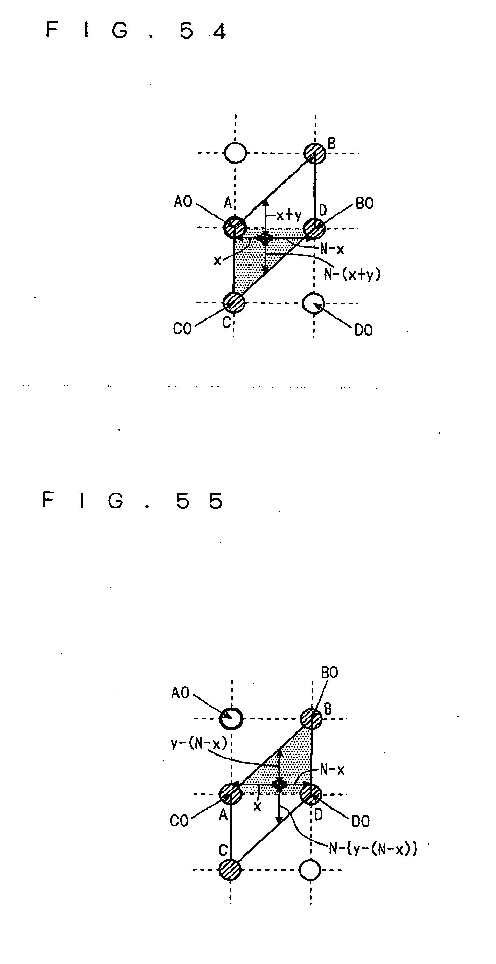

With reference to FIG. 54 to FIG. 75, description will be given of the interpolation coefficient of each pattern when the interpolation position (position of the representative point) is coordinates (x, y) (0≤x<N, 0≤y<N). Note that the second original pixel group A, B, C and D of the pattern 0 is the same as the first original pixel group A0, B0, C0 and D0, and thus the interpolation coefficient thereof is [x]:[N-x] in the horizontal direction and [y]:[N-y] in the vertical direction.

With reference to FIG. 54, in the case of the pattern 1, the point A, the point B, the point C and the point D of the second original pixel group are the point P (i, j), the point P (i+1, j-1), the point P (i, j+1) and the point P (i+1, j), respectively. The interpolation coefficient is [x]:[N-x] in the horizontal direction and [x+y]:[N-(x+y)] in the vertical direction.

With reference to FIG. 55, in the case of the pattern 2, the point A, the point B, the point C and the point D of the second original pixel group are the point P (i, j+1), the point P (i+1, j), the point P (i, j+2) and the point P (i+1, j+1), respectively. The interpolation coefficient is [x]:[N-x] in the horizontal direction and [y-(N-x)]:[N-{y-(N-x)}] in the vertical direction.

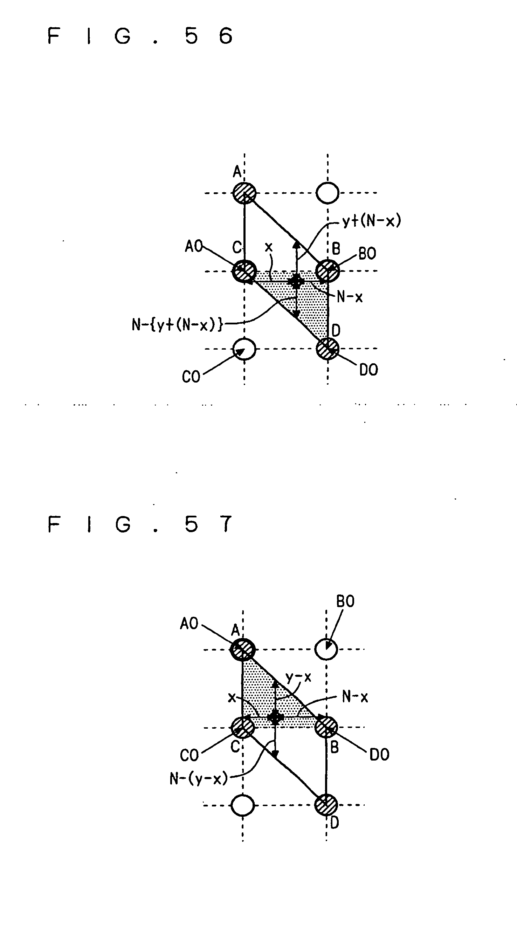

With reference to FIG. 56, in the case of the pattern 3, the point A, the point B, the point C and the point D of the second original pixel group are the point P (i, j-1), the point P (i+1, j), the point P (i, j) and the point P (i+1, j+1), respectively. The interpolation coefficient is [x]:[N-x] in the horizontal direction and [y+(N-x)]:[N-{y+(N-x)}] in the vertical direction.

With reference to FIG. 57, in the case of the pattern 4, the point A, the point B, the point C and the point D of the second original pixel group are the point P (i, j), the point P (i+1, j+1), the point P (i, j+1) and the point P (i+1, j+2), respectively. The interpolation coefficient is [x]:[N-x] in the horizontal direction and [y-x]:[N-(y-x)] in the vertical direction.

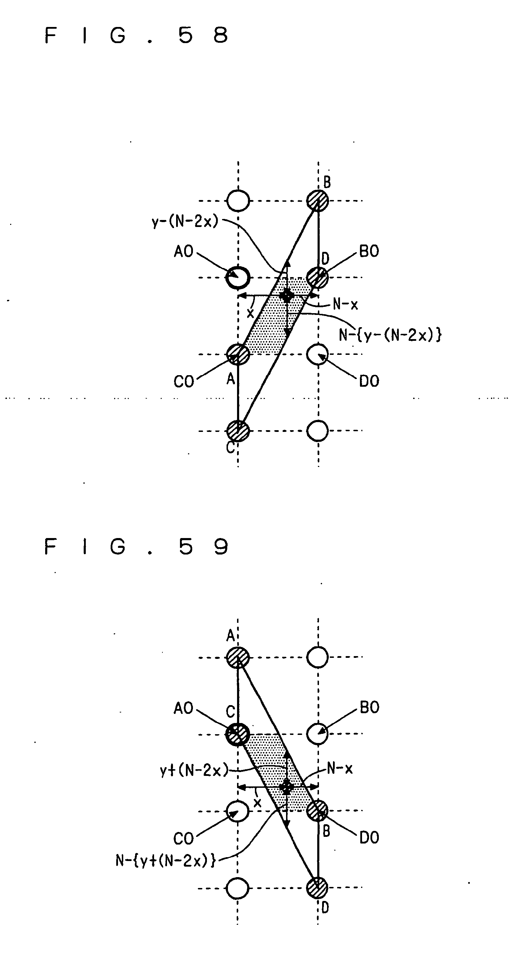

With reference to FIG. 58, in the case of the pattern 5, the point A, the point B, the point C and the point D of the second original pixel group are the point P (i, j+1), the point P (i+1, j-1), the point P (i, j+2) and the point P (i+1, j), respectively. The interpolation coefficient is [x]:[N-x] in the horizontal direction and [y-(N-2x)]:[N-{y-(N-2x)}] in the vertical direction.

With reference to FIG. 59, in the case of the pattern 6, the point A, the point B, the point C and the point D of the second original pixel group are the point P (i, j-1), the point P (i+1, j+1), the point P (i, j) and the point P (i+1, j+2), respectively. The interpolation coefficient is [x]:[N-x] in the horizontal direction and [y+(N-2x)]:[N-{y+(N-2x)}] in the vertical direction.

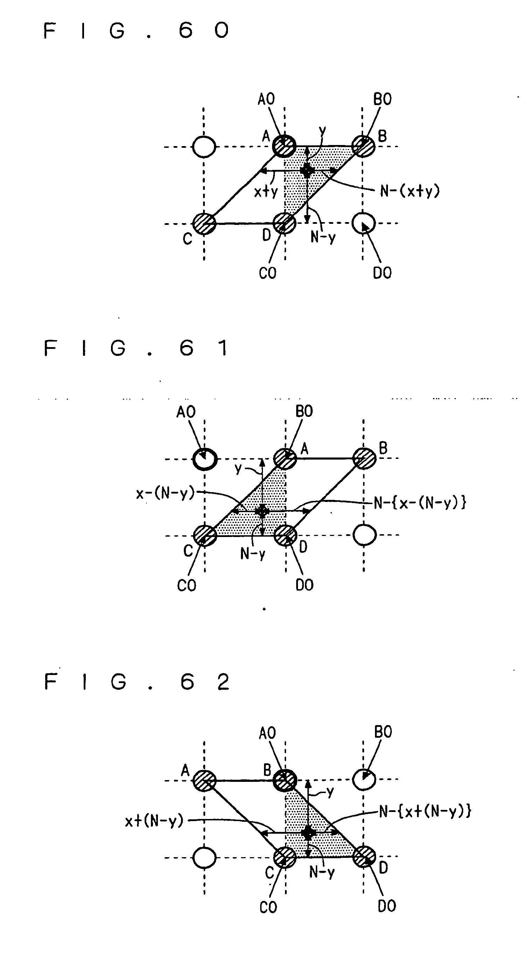

With reference to FIG. 60, in the case of the pattern 7, the point A, the point B, the point C and the point D of the second original pixel group are the point P (i, j), the point P (i+1, j), the point P (i-1, j+1) and the point P (i, j+1), respectively. The interpolation coefficient is [x+y]:[N-(x+y)] in the horizontal direction and [y]:[N-y] in the vertical direction.

With reference to FIG. 61, in the case of the pattern 8, the point A, the point B, the point C and the point D of the second original pixel group are the point P (i+1, j), the point P (i+2, j), the point P (i, j+1) and the point P (i+1, j+1), respectively. The interpolation coefficient is [x-(N-y)]:[N-{x-(N-y)}] in the horizontal direction and [y]:[N-y] in the vertical direction.

With reference to FIG. 62, in the case of the pattern 9, the point A, the point B, the point C and the point D of the second original pixel group are the point P (i-1, j), the point P (i, j), the point P (i, j+1) and the point P (i+1, j+1), respectively. The interpolation coefficient is [x+(N-y)]:[N-{x+(N-y)}] in the horizontal direction and [y]:[N-y] in the vertical direction.

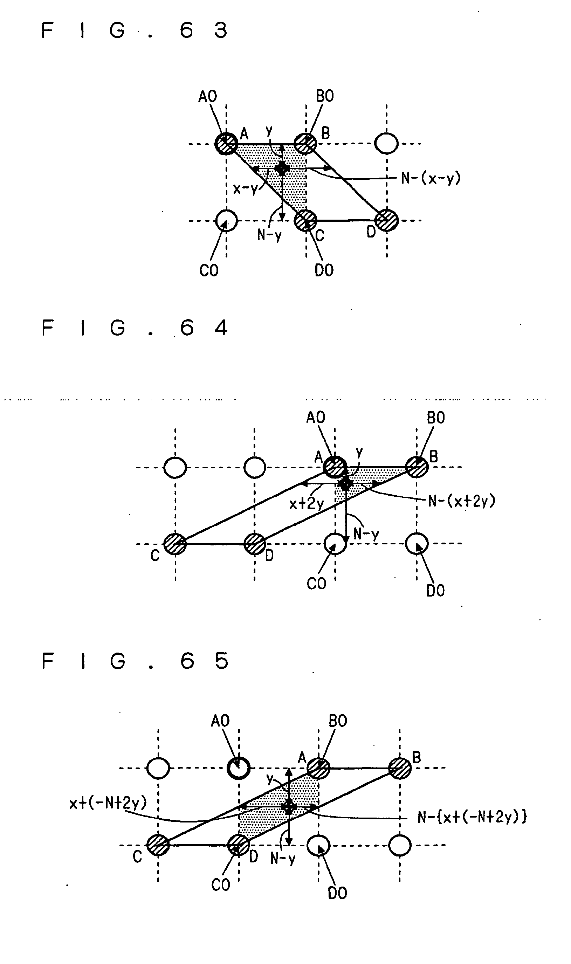

With reference to FIG. 63, in the case of the pattern 10, the point A, the point B, the point C and the point D of the second original pixel group are the point P (i, j), the point P (i+1, j), the point P (i+1, j+1) and the point P (i+2, j+1), respectively. The interpolation coefficient is [x-y]:[N-(x-y)] in the horizontal direction and [y]:[N-y] in the vertical direction.

With reference to FIG. 64, in the case of the pattern 11, the point A, the point B, the point C and the point D of the second original pixel group are the point P (i, j), the point P (i+1, j), the point P (i-2, j+1) and the point P (i-1, j+1), respectively. The interpolation coefficient is [x+2y]:[N-(x+2y)] in the horizontal direction and [y]:[N-y] in the vertical direction..

With reference to FIG. 65, in the case of the pattern 12, the point A, the point B, the point C and the point D of the second original pixel group are the point P (i+1, j), the point P (i+2, j), the point P (i-1, j+1) and the point P (i, j+1), respectively. The interpolation coefficient is [x+(-N+2y)]:[N-{x+(-N+2y)}] in the horizontal direction and [y]:[N-y] in the vertical direction.

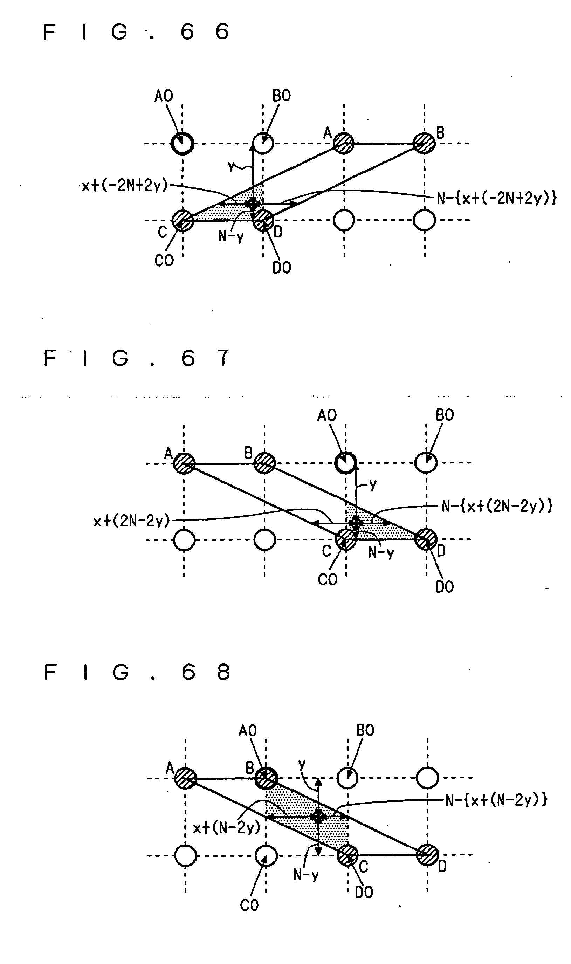

With reference to FIG. 66, in the case of the pattern 13, the point A, the point B, the point C and the point D of the second original pixel group are the point P (i+2, j), the point P (i+3, j), the point P (i, j+1) and the point P (i+1, j+1), respectively. The interpolation coefficient is [x+(-2N+2y)]:[N-{x+(-2N+2y)}] in the horizontal direction and [y]:[N-y] in the vertical direction.

With reference to FIG. 67, in the case of the pattern 14, the point A, the point B, the point C and the point D of the second original pixel group are the point P (i-2, j), the point P (i-1, j), the point P (i, j+1) and the point P (i+1, j+1), respectively. The interpolation coefficient is [x+(2N-2y)]:[N-{x+(2N-2y)}] in the horizontal direction and [y]:[N-y] in the vertical direction.

With reference to FIG. 68, in the case of the pattern 15, the point A, the point B, the point C and the point D of the second original pixel group are the point P (i-1, j), the point P (i, j), the point P (i+1, j+1) and the point P (i+2, j+1), respectively. The interpolation coefficient is [x+(N-2y)]:[N-{x+(N-2y)}] in the horizontal direction and [y]:[N-y] in the vertical direction.

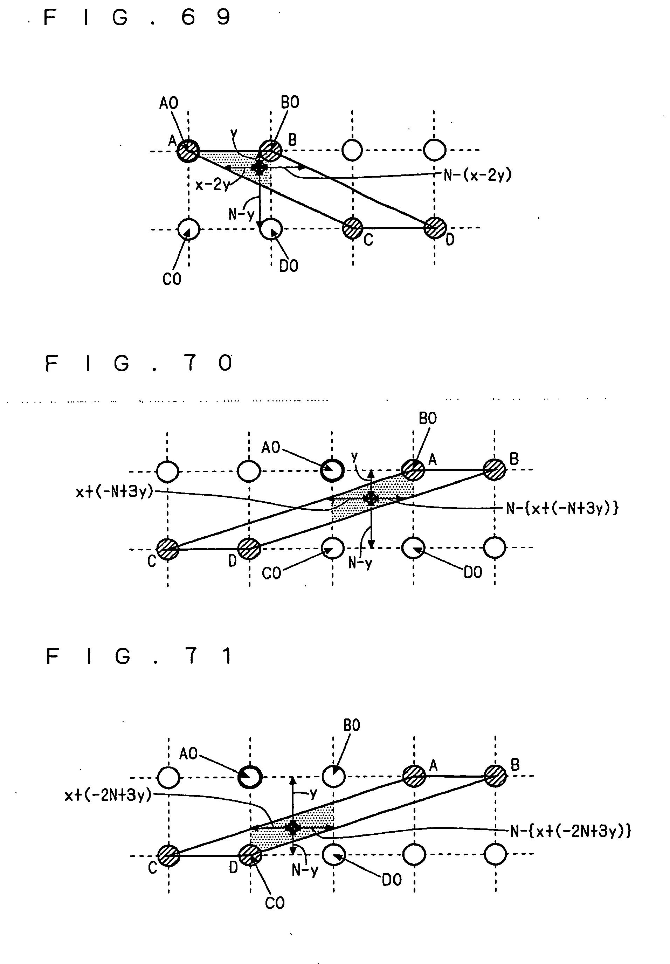

With reference to FIG. 69, in the case of the pattern 16, the point A, the point B, the point C and the point D of the second original pixel group are the point P (i, j), the point P (i+1, j), the point P (i+2, j+1) and the point P (i+3, j+1), respectively. The interpolation coefficient is [x-2y]:[N-(x-2y)] in the horizontal direction and [y]:[N-y] in the vertical direction.

With reference to FIG. 70, in the case of the pattern 17, the point A, the point B, the point C and the point D of the second original pixel group are the point P (i+1, j), the point P (i+2, j), the point P (i-2, j+1) and the point P (i-1, j+1), respectively. The interpolation coefficient is [x+(-N+3y)]:[N-{x+(-N+3y)}] in the horizontal direction and [y]:[N-y] in the vertical direction.

With reference to FIG. 71, in the case of the pattern 18, the point A, the point B, the point C and the point D of the second original pixel group are the point P (i+2, j), the point P (i+3, j), the point P (i-1, j+1) and the point P (i, j+1), respectively. The interpolation coefficient is [x+(-2N+3y)]:[N-{x+(-2N+3y)}] in the horizontal direction and [y]:[N-y] in the vertical direction.

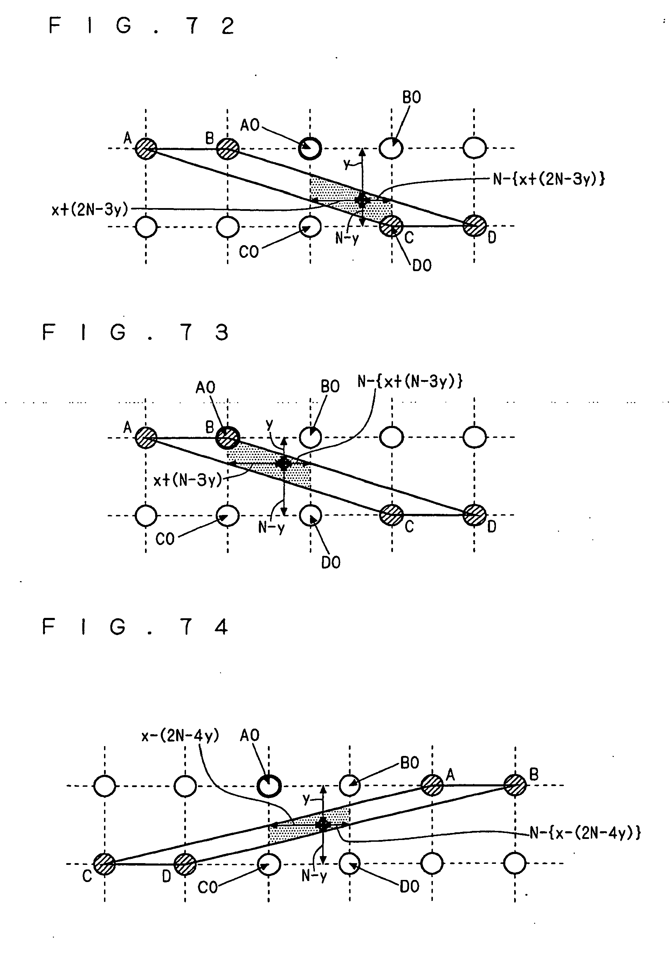

With reference to FIG. 72, in the case of the pattern 19, the point A, the point B, the point C and the point D of the second original pixel group are the point P (i-2, j), the point P (i-1, j), the point P (i+1, j+1) and the point P (i+2, j+1), respectively. The interpolation coefficient is [x+(2N-3y)]:[N-{x+(2N-3y)}] in the horizontal direction and [y]:[N-y] in the vertical direction.

With reference to FIG. 73, in the case of the pattern 20, the point A, the point B, the point C and the point D of the second original pixel group are the point P (i-1, j), the point P (i, j), the point P (i+2, j+1) and the point P (i+3, j+1), respectively. The interpolation coefficient is [x+(N-3y)]:[N-{x+(N-3y)}] in the horizontal direction and [y]:[N-y] in the vertical direction.

With reference to FIG. 74, in the case of the pattern 21, the point A, the point B, the point C and the point D of the second original pixel group are the point P (i+2, j), the point P (i+3, j), the point P (i-2, j+1) and the point P (i-1, j+1), respectively. The interpolation coefficient is [x-(2N-4y)]:[N-{x-(2N-4y)}] in the horizontal direction and [y]:[N-y] in the vertical direction.

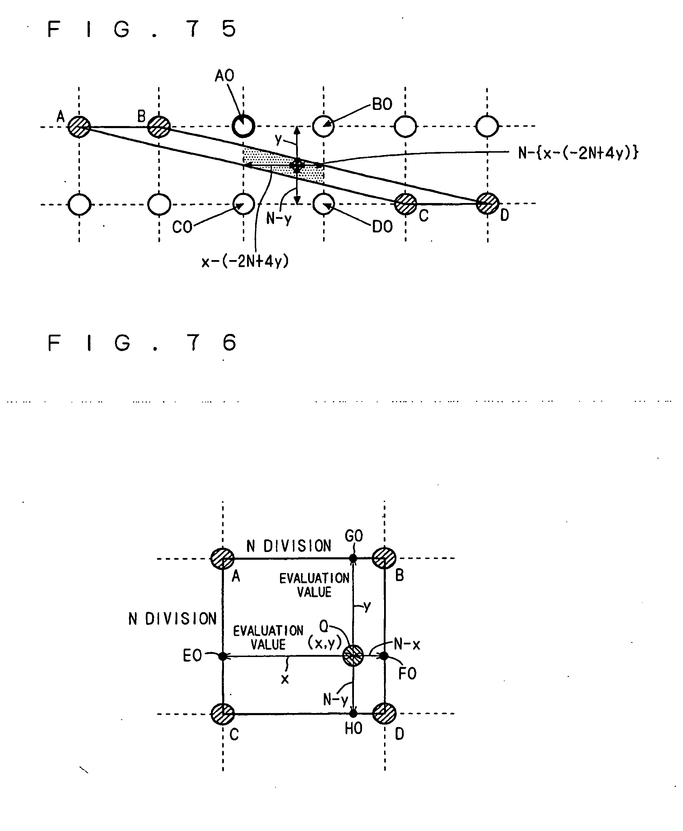

With reference to FIG. 75, in the case of the pattern 22, the point A, the point B, the point C and the point D of the second original pixel group are the point P (i-2, j), the point P (i-1, j), the point P (i+2, j+1) and the point P (i+3, j+1), respectively. The interpolation coefficient is [x-(-2N+4y)]:[N-{x-(-2N+4y)}] in the horizontal direction and [y]:[N-y] in the vertical direction.

The second oblique direction pattern information outputted from the representative point evaluating section 52 is inputted to the interpolation direction evaluation value computing section 53. The interpolation direction evaluation value computing section 53 extracts an effective oblique direction pattern from the second oblique direction pattern information inputted from the representative point evaluating section 52, and also computes an interpolation direction evaluation value from the original pixel data inputted from the input terminal 56, to thereby output the interpolation direction evaluation value to the interpolation direction evaluating section 54.

With reference to FIGS. 76 to 78, next, a method of computing the interpolation direction evaluation value will be described. FIG. 76 shows an example of the pattern 0. In this case, the evaluation is made using the line segment AB and the line segment CD in the horizontal direction. Specifically, using a difference value (difAB) between the pixel value of the original pixel A and the pixel value of the original pixel B and a difference value (difCD) between the pixel value of the original pixel C and the pixel value of the original pixel D, difAB, difCD, and (difAB+difCD)/2 are regarded as the interpolation direction evaluation value when the interpolation point is positioned on the line segment AB, when the interpolation point is positioned on the line segment CD, and in other case, respectively (horizontal direction difference value). The evaluation is made using the line segment AC and the line segment BD in the vertical direction. Specifically, using a difference value (difAC) between the pixel value of the original pixel A and the pixel value of the original pixel C and a difference value (difBD) between the pixel value of the original pixel B and the pixel value of the original pixel D, difAC, difBD, and (difAC+difBD)/2 are regarded as the interpolation direction evaluation value when the interpolation point is positioned on the line segment AC, when the interpolation point is positioned on the line segment BD, and in other case, respectively (vertical direction difference value).

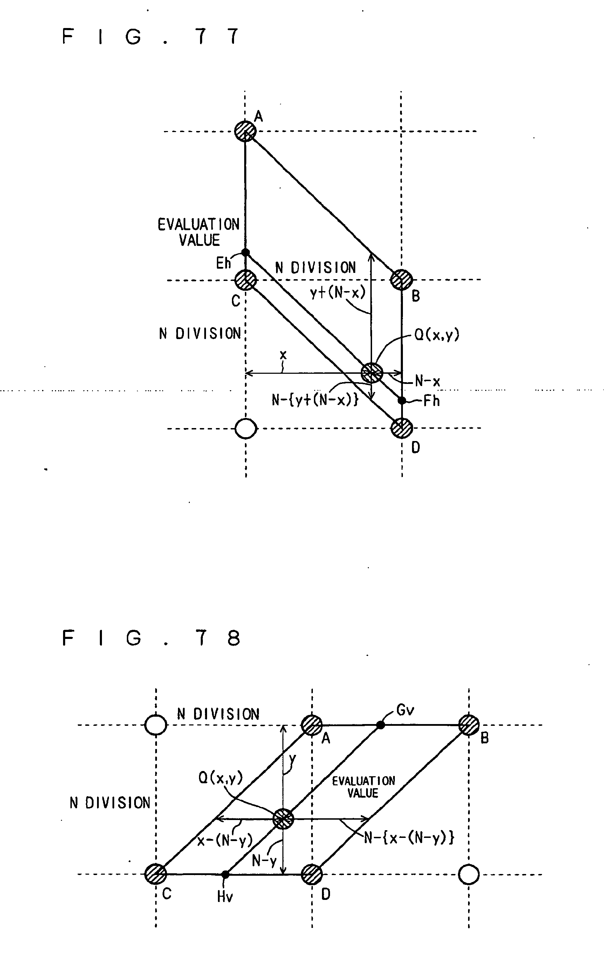

FIG. 77 shows an example of a pattern having an oblique slope in the horizontal direction. In this case, the evaluation is made using the line segment AB and the line segment CD which are each in an oblique direction with respect to this horizontal direction. Specifically, using the difference value (difAB) between the pixel value of the original pixel A and the pixel value of the original pixel B and the difference value (difCD) between the pixel value of the original pixel C and the pixel value of the original pixel D, difAB, difCD, and (difAB+difCD)/2 are regarded as the interpolation direction evaluation value when the interpolation point is positioned on the line segment AB, when the interpolation point is positioned on the line segment CD, and in other case, respectively (oblique direction difference value).

FIG. 78 shows an example of a pattern having an oblique slope in the vertical direction. In this case, the evaluation is made using the line segment AC and the line segment BD which are each in an oblique direction with respect to this vertical direction. Specifically, using the difference value (difAC) between the pixel value of the original pixel A and the pixel value of the original pixel C and the difference value (difBD) between the pixel value of the original pixel B and the pixel value of the original pixel D, difAC, difBD, and (difAC+difBD)/2 are regarded as the interpolation direction evaluation value when the interpolation point is positioned on the line segment AC, when the interpolation point is positioned on the line segment BD, and in other case, respectively.

Note that the interpolation direction evaluation value is not limited thereto, and in a case where the arithmetic operation is still available, as described with reference to FIGS. 77 and 78 below, the interpolation direction evaluation value may be a difference value between pixel values of two points at which a straight line, which is parallel to sides having an oblique slope in the horizontal direction or the vertical direction of the parallelogram defined by the second original pixel group A, B, C and D and passes through the interpolation position, intersects the sides in parallel to the vertical direction or the horizontal direction. In this case, in the pattern 0, as described with reference to FIG. 76 below, the interpolation direction evaluation value is a difference value between the pixel values of two points at which the straight line passing through the interpolation position intersects the sides in parallel to the vertical direction of the parallelogram (quadrangle) defined by the second original pixel group A, B, C and D, or a difference value between the pixel values of two points at which the straight line intersects the sides in parallel to the horizontal direction thereof.

Specifically, in FIG. 76, when an interpolation position of an interpolation pixel Q is coordinates (x, y), the interpolation direction evaluation value of the pattern 0 is a difference value (vertical direction difference value) between a pixel value of a point G0 at which the line segment AB is divided internally at x:(N-x) and a pixel value of a point H0 at which the line segment CD is divided internally at x:(N-x) or a difference value (horizontal direction difference value) between a pixel value of a point E0 at which the line segment AC is divided internally at y:(N-y) and a pixel value of a point F0 at which the line segment BD is divided internally at y:(N-y).

In the same manner, an interpolation direction evaluation value of the oblique direction pattern having an oblique slope in the horizontal direction as shown in FIG. 77 is a difference value (oblique direction difference value) between a pixel value of a point Eh and a pixel value of a point Fh at which the straight line, which passes through the interpolation position (x, y) of the interpolation pixel Q and is parallel to the line segment AB and the line segment CD, intersects the line segment AC and the line segment BD, respectively.

Further, an interpolation direction evaluation value of the oblique direction pattern having an oblique slope in the vertical direction as shown in the vertical direction as shown in FIG. 78 is a difference value (oblique direction difference value) between a pixel value of a point Gv and a pixel value of a point Hv at which the straight line, which passes through the interpolation position (x, y) of the interpolation pixel Q and is parallel to the line segment AC and the line segment BD, intersects the line segment AB and the line segment CD, respectively. Note that the respective pixel values of the points E0, F0, G0 H0, Eh, Fh, Gv and Hv are computed from the respective pixel values a, b, c and d of the second original pixel group A, B, C and D at an internal division ratio.

As described below, the interpolation pixel value (second interpolation pixel value candidate) is computed from four original pixel values (second original pixel group data), which constitute one effective oblique direction pattern selected by the interpolation direction determining section 5, by the oblique direction interpolation section 6 through interpolation processing. Therefore, when the interpolation position is not at least on the straight line connecting two original pixels in computing the interpolation direction evaluation value (value for evaluating a degree of an oblique slope), it is effective to take the four original pixel values (second original pixel group data) which constitute the oblique direction pattern into account.

With reference to FIG. 5, the interpolation direction evaluation value computed by the interpolation direction evaluation value computing section 53 is added to the second oblique direction pattern information inputted from the representative point evaluation section 52, and then outputted to the interpolation direction evaluating section 54. The interpolation direction evaluating section 54 picks up the interpolation direction evaluation value of the effective oblique direction pattern from the second oblique direction pattern information outputted from the interpolation direction evaluation value computing section 53, and evaluates the interpolation direction evaluation value, to thereby determine the interpolation direction. The interpolation direction is an oblique direction pattern having a small interpolation direction evaluation value, in which interpolation direction priority setting inputted from the input terminal 59 is taken into account.

Through the interpolation direction priority setting, for example, in a case where the interpolation direction evaluation values are the same, control is made as to whether the horizontal/vertical direction pattern (pattern 0) is given priority, or whether the oblique direction patterns (pattern 1 to pattern 22) are given priority. When the oblique direction patterns are the same, control is made as to whether the oblique direction patterns (pattern 1 to pattern 6) having the oblique slope in the horizontal direction are given priority, or the oblique direction patterns (pattern 7 to pattern 22) having the oblique slope in the vertical direction are given priority. The priority may be given within the oblique direction patterns (pattern 1 to pattern 6) having the oblique slope in the horizontal direction, or the priority may be given within the oblique direction patterns (pattern 7 to pattern 22) having the oblique slope in the vertical direction.

The interpolation direction determined by the interpolation direction evaluating section 54 is outputted as the interpolation direction information from the output terminal 58 to the oblique direction interpolation section 6 (see FIG. 6). In the oblique direction interpolation section 6, the interpolation direction information inputted from the interpolation direction determining section 5 via the input terminal 64 is inputted to the second interpolation coefficient computing section 62, and is also inputted to the processed pixel selecting section 61. In addition, the interpolation position information is inputted from the memory control section 2 via the input terminal 65, and is inputted to the second interpolation coefficient computing section 62.

The original pixel data (second original pixel group data corresponding to the respective oblique direction patterns) is inputted from the memory control section 2 via the input terminal 66, and is inputted to the processed pixel selecting section 61. The processed pixel selecting section 61 selects, from the second original pixel group data corresponding to the respective oblique direction patterns inputted from the input terminal 66, the second original pixel group data of the oblique direction pattern contained in the interpolation direction information inputted from the input terminal 64, and outputs the second original pixel group data to the second linear interpolation processing section 63.

The second interpolation coefficient computing section 62 computes the second interpolation coefficient from the interpolation direction information inputted from the input terminal 64 and the interpolation position information inputted from the input terminal 65, and outputs the second interpolation coefficient to the second linear interpolation processing section 63. The second interpolation coefficient varies in accordance with the interpolation position (x, y) ($0 \leq x < N$, $0 \leq y < N$) and the oblique direction pattern, and the second interpolation coefficient of each oblique direction pattern is computed in the similar manner as that of the above-mentioned interpolation coefficient of the oblique direction pattern representative value qs. Note that the oblique direction pattern which is uniquely selected by the interpolation direction determining section 5 is inputted as the interpolation direction information to the oblique direction interpolation section 6 (second interpolation coefficient computing section 62).

The second linear interpolation processing section 63 performs linear interpolation on the second original pixel group outputted from the processed pixel selecting section 61 using the second interpolation coefficient outputted from the second interpolation coefficient computing section 62, and outputs a second interpolation pixel value candidate.

The second interpolation pixel value candidate is obtained from Expression (27) using the respective pixel values a, b, c and d of the second original pixel group A, B, C and D, respectively, if the second interpolation coefficient is u:N-u ($0 \leq u < N$) in the horizontal direction and v:N-v ($0 \leq v < N$) in the vertical direction.

[Expression 27]

$$q = \frac{\{a \times (N - u) + b \times u\} \times (N - v) + \{c \times (N - u) + d \times u\} \times v}{N \times N} \quad ...(27)$$

The second interpolation pixel value candidate is outputted from the output terminal 67 to the interpolation pixel determining section 7 (see FIG. 7).

In the interpolation pixel value determining section 7, the oblique direction interpolation selection condition is inputted from the horizontal/vertical direction interpolation section 4 via the input terminal 74, and inputted to the oblique direction interpolation effectiveness discriminating section 71. Further, the first interpolation pixel value candidate inputted from the horizontal/vertical direction interpolation section 4 via the input terminal 75 is inputted to an input terminal 72a of the interpolation pixel value selecting section 72.

The second interpolation pixel value candidate inputted from the oblique direction interpolation section 6 via the input terminal 77 is inputted to the oblique direction interpolation effectiveness discriminating section 71 and an input terminal 72b of the first interpolation pixel value selecting section 72. The oblique direction interpolation effectiveness discriminating section 71 discriminates that the second interpolation pixel value candidate inputted from the input terminal 77 is effective if the second interpolation pixel value candidate coincides with the oblique direction interpolation selection condition inputted from the input terminal 74, and discriminates that the second interpolation pixel value candidate is ineffective if the second interpolation pixel value candidate does not coincide with the oblique direction interpolation selection condition inputted from the input terminal 74. An effectiveness/ineffectiveness discriminating signal related to the second interpolation pixel value candidate is outputted to the first interpolation pixel value selecting section 72 from the oblique direction interpolation effectiveness discriminating section 71.

The first interpolation pixel value selecting section 72 selects the first interpolation pixel value candidate inputted to the input terminal 72a or the second interpolation pixel value candidate inputted to the input terminal 72b in response to the effectiveness/ineffectiveness discriminating signal inputted from the oblique direction interpolation effectiveness discriminating section 71, and outputs the selected one from an output terminal 72c.

Specifically, the second interpolation pixel value candidate inputted from the input terminal 72b is selected when the effectiveness/ineffectiveness discriminating signal is effective, and the first interpolation pixel value candidate inputted from the input terminal 72a is selected when the effectiveness/ineffectiveness discriminating signal is ineffective, whereby the selected one is outputted from the output terminal 72c. The interpolation pixel value outputted from the output terminal 72c of the first interpolation pixel value selecting section 72 is inputted to an input terminal 73b of the second interpolation pixel value selecting section 73. On the other hand, the first interpolation pixel value candidate inputted from the input terminal 75 is inputted to an input terminal 73a of the second interpolation pixel value selecting section 73. In the second interpolation pixel value selecting section 73, switching is made between the first interpolation pixel value candidate inputted from the input terminal 73a and an output of the first interpolation pixel value selecting section 72 inputted from the input terminal 73b in accordance with the interpolation direction information inputted from the input terminal 76, and the switched one is outputted from the output terminal 73c to be outputted from the output terminal 78.

Specifically, in a case where the pattern 0 is selected as the interpolation direction information outputted from the interpolation direction determining section 5, the first interpolation pixel value candidate inputted from the input terminal 73a is selected. Note that in this case, the first interpolation pixel value candidate which is outputted from the horizontal/vertical direction interpolation section 4 and is inputted from the input terminal 75 and the second interpolation pixel value candidate which is outputted from the oblique direction interpolation section 6 and is inputted from the input terminal 77 coincide with each other, and hence it goes without saying that the second interpolation pixel value candidate inputted from the input terminal 73b may be selected.

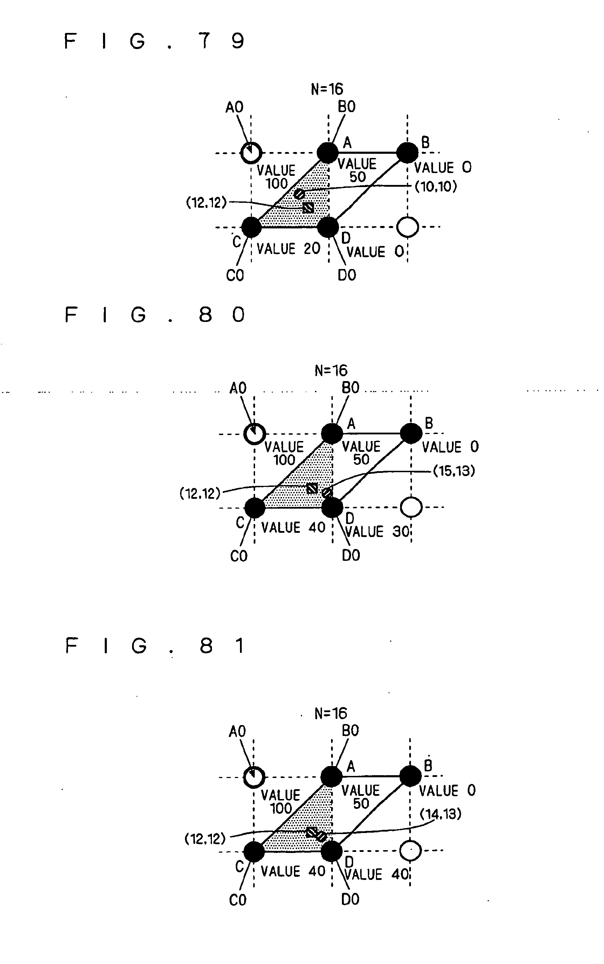

Next, by way of specific examples shown in FIGS. 79 to 81, operations of the horizontal/vertical direction interpolation section 4, the interpolation direction determining section 5, the oblique direction interpolation section 6 and the interpolation pixel value determining section 7 will be described. Here, for simplicity of description, description is given assuming that only the pattern 0 and the pattern 8 are the effective oblique direction patterns from the condition for the interpolation position.

FIG. 79 shows the pattern 0 and the pattern 8 when the division number is 16 and the interpolation position is (10, 10). A pixel value of the point A0 is 100, a pixel value of the point A (B0) is 50, a pixel value of the point B is 0, a pixel value of the point C (C0) is 20, and a pixel value of the point D (D0) is 0. The first original pixel group A0, B0, C0 and D0 is inputted to the first linear interpolation processing section 42 of the horizontal/vertical direction interpolation section 4, whereby elements of the interpolation direction effectiveness discrimination condition and the oblique direction interpolation selection condition are computed.

The elements related to the pattern 8 of the interpolation direction effectiveness discrimination condition are a03b01=62.5, c03d01=5, a03c01=40, and b03d01=12.5, and the interpolation direction effectiveness discrimination condition is max (a03b01, c03d01, a03c01, b03d01) = 62.5 and min (a03b01, c03d01, a03c01, b03d01) = 5.

The elements of the oblique direction interpolation selection condition are h0t=68.8, h0b=7.5, v01=50, and v0r=18.8, and the oblique direction interpolation selection condition is max (h0t, h0b, v0I, v0r) = 68.8 and min (h0t, h0b, v0l, v0r) = 7.5.

The interpolation direction determining section 5 determines the interpolation direction. The first oblique direction pattern information in which the pattern 0 and the pattern 8 are the effective oblique direction patterns is outputted to the representative point evaluating section 52 from the oblique direction pattern search section 51.

The representative point evaluating section 52 computes, as to the effective oblique direction patterns outputted from the oblique direction pattern search section 51, the oblique direction pattern representative value qs from the representative point thereof and the second original pixel group, to thereby judge effectiveness/ineffectiveness based on the oblique direction pattern representative value qs.

The representative point of the pattern 8 is (12, 12), and the oblique direction pattern representative value qs is 13.8 from Expression (26). The pattern 8 is judged as an effective oblique direction pattern from min (a03b01, c03d01, a03c01, b03d01) $\leq$ qs $\leq$ max (a03b01, c03d01, a03c01, b03d01). The pattern 0 is a constantly effective (oblique direction) pattern.

Accordingly, the second oblique direction pattern information in which the pattern 0 and the pattern 8 are effective oblique direction patterns is outputted to the interpolation direction evaluation value computing section 53.

Next, the interpolation direction evaluation value computing section 53 computes the interpolation direction evaluation value of the oblique direction patterns which have been judged to be effective by the representative point evaluating section 52. The interpolation direction evaluation value of the pattern 0 is (|100-50|+|20-0|)/2=35 in the horizontal direction and (|100-20|+|50-0|)/2=65 in the vertical direction, and the interpolation direction evaluation value of the pattern 8 is (|50-20|+|0-0|)/2=15. The computed interpolation direction evaluation values are outputted to the interpolation direction evaluating section 54.

The interpolation direction evaluating section 54 evaluates the interpolation direction of the effective oblique direction pattern contained in the second oblique direction pattern information based on the interpolation direction evaluation values computed by the interpolation direction evaluating section 53. Here, there is selected a pattern with the minimum interpolation direction evaluation value. Accordingly, the pattern 8 is selected and outputted as the interpolation direction information from the output terminal 58. Note that in a case where the interpolation direction evaluation values are the same by the interpolation direction priority setting inputted from the input terminal 59, it is possible to control which of the oblique direction patterns is preferentially selected.

The interpolation direction determining section 5 selects the pattern 8, and then the oblique direction interpolation section 6 performs linear interpolation processing using the second original pixel group A, B, C and D of the pattern 8. The interpolation coefficient of the pattern 8 is [10-(16-10)]:[16-{10-(16-10)}] in the horizontal direction and [10]:[16-10] in the vertical direction. Therefore, the second interpolation pixel value candidate is 23.4 from Expression (27).

Meanwhile, the horizontal/vertical direction interpolation section 4 computes the first interpolation pixel value candidate from Expression (1) using the first original pixel group A0, B0, C0 and D0 and the interpolation coefficient ([10]:[16-10] in the horizontal direction and [10]:[16-10] in the vertical direction), which is 30.5. The computed first interpolation pixel value candidate is outputted to the interpolation pixel value determining section 7.

In the interpolation pixel value determining section 7, the oblique direction interpolation effectiveness discriminating section 71 judges effectiveness or ineffectiveness of the second interpolation pixel value candidate outputted from the oblique direction interpolation section 6 from the oblique direction interpolation selection condition outputted from the horizontal/vertical direction interpolation section 4. The second interpolation pixel value candidate 23.4 falls between min (h0t, h0b, v0I, v0r) = 7.5 and max (h0t, h0b, v0I, v0r) = 68.8 of the oblique direction interpolation selection condition, and is accordingly judged to be effective. Then, the second interpolation pixel value candidate is selected as the final interpolation pixel and is outputted from the output terminal 78.

Here, the interpolation pixel value is evaluated by way of the simplest example. Taking oblique lines from top right to bottom left, which form a boundary between the point B0 (A) and the point C0 (C), and a boundary between the point B and the point D0 (D), as an example, the interpolation position (10, 10) of the interpolation position is a point at which the boundary is divided internally at 2:6 on a straight line passing through a middle point between the point B0 (A) and the point C0 (C) and the point D0 (D). Therefore, (50+20)/2×6/8=26.25 is one of the optimum interpolation pixel values. A difference value from the first interpolation pixel value candidate 30.5 is |30.5-26.25|=4.25, and a difference value from the second interpolation pixel value candidate 23.4 is |23,4-26.25|=2.85. Therefore, the interpolation pixel which is closer to the oblique line is obtained by the second interpolation pixel value candidate, with the result that it is possible to obtain a visually sharp (crisp) and excellent enlarged image without blurring an outline.

FIG. 80 shows the pattern 0 and the pattern 8 when the division number is 16 and the interpolation position is (15, 13). The pixel value of the point A0 is 100, the pixel value of the point A (B0) is 50, the pixel value of the point B is 0, the pixel value of the point C (C0) is 40, and the pixel value of the point D (D0) is 30. The first original pixel group A0, B0, C0 and D0 is inputted to the first linear interpolation processing section 42 of the horizontal/vertical direction interpolation section 4, whereby the elements of the interpolation direction effectiveness discrimination condition and the oblique direction interpolation selection condition are computed.

The elements related to the pattern 8 of the interpolation direction effectiveness discrimination condition are a03b01=62.5, c03d01=32.5, a03c01=55, and b03d01=35, and the interpolation direction effectiveness discrimination condition is max (a03b01, c03d01, a03c01, b03d01) = 62.5 and min (a03b01, c03d01, a03c01, b03d01) = 32.5. The elements of the oblique direction interpolation selection condition are h0t=53.1, h0b=30.6, v0l=51.3, and v0r=33.8, and the oblique direction interpolation selection condition is max (h0t, h0b, v0l, v0r) = 53.1 and min (h0t, h0b, v0l, v0r) = 30.6.

The interpolation direction determining section 5 determines the interpolation direction. The first oblique direction pattern information in which the pattern 0 and the pattern 8 are effective oblique direction patterns is outputted to the representative point evaluating section 52 from the oblique direction pattern search section 51.

The representative point evaluating section 52 computes, as to the effective oblique direction patterns outputted from the oblique direction pattern search section 51, the oblique direction pattern representative value qs from the representative point thereof and the second original pixel group, to thereby judge effectiveness or ineffectiveness based on the oblique direction pattern representative value qs.

The representative point of the pattern 8 is (12, 12), and the oblique direction pattern representative value qs is 32.5 from Expression (26). The pattern 8 is judged as an effective oblique direction pattern from min (a03b01, c03d01, a03c01, b03d01) ≤ qs ≤ max (a03b01, c03d01, a03c01, b03d01). The pattern 0 is a constantly effective (oblique direction) pattern.

Accordingly, the second oblique direction pattern information in which the pattern 0 and the pattern 8 are effective oblique direction patterns is outputted to the interpolation direction evaluation value computing section 53.

Next, the interpolation direction evaluation value computing section 53 computes the interpolation direction evaluation value of the oblique direction patterns which have been judged to be effective by the representative point evaluating section 52. The interpolation direction evaluation value of the pattern 0 is (|100-50|+|40-30|)/2=30 in the horizontal direction and (|100-40|+|50-30|)/2=40 in the vertical direction, and the interpolation direction evaluation value of the pattern 8 is (|50-40|+|0-30|)/2=20. The computed interpolation direction evaluation values are outputted to the interpolation direction evaluating section 54.

The interpolation direction evaluating section 54 evaluates the interpolation direction of the effective oblique direction pattern contained in the second oblique direction pattern information based on the interpolation direction evaluation values computed by the interpolation direction evaluating section 53. Here, there is selected a pattern with the minimum interpolation direction evaluation value. Accordingly, the pattern 8 is selected and outputted as the interpolation direction information from the output terminal 58. Note that in the case where the interpolation direction evaluation values are the same by the interpolation direction priority setting inputted from the input terminal 59, it is possible to control which of the oblique direction patterns is preferentially selected.

The interpolation direction determining section 5 selects the pattern 8, and then the oblique direction interpolation section 6 performs linear interpolation processing using the second original pixel group A, B, C and D of the pattern 8. The interpolation coefficient of the pattern 8 is [15-(16-13)]:[16-{15-(16-13)}] in the horizontal direction and [13]:[16-13] in the vertical direction. Therefore, the second interpolation pixel value candidate is 28.8 from Expression (27).

Meanwhile, the horizontal/vertical direction interpolation section 4 computes the first interpolation pixel value candidate from Expression (1) using the first original pixel group A0, B0, C0 and D0 and the interpolation coefficient ([15]:[16-15] in the horizontal direction and [13]:[16-13] in the vertical direction), which is 34.8. The computed first interpolation pixel value candidate is outputted to the interpolation pixel value determining section 7.

In the interpolation pixel value determining section 7, the oblique direction interpolation effectiveness discriminating section 71 judges effectiveness or ineffectiveness of the second interpolation pixel value candidate outputted from the oblique direction interpolation section 6 from the oblique direction interpolation selection condition outputted from the horizontal/vertical direction interpolation section 4. The second interpolation pixel value candidate 28.8 does not fall between min (h0t, h0b, v0l, v0r) = 30.6 and max (h0t, h0b, v0l, v0r) = 53.1 of the oblique direction interpolation selection condition, and is accordingly judged to be ineffective. Then, the first interpolation pixel value candidate is selected as the final interpolation pixel and outputted from the output terminal 78. The value 28.8 of the second interpolation pixel value candidate is a pixel value which is inappropriate for a slope of a pixel value constituted by four original pixels (first original pixel group) surrounding the interpolation pixel. Therefore, if the value 28.8 is not selected, it is possible to obtain an excellent enlarged image without generating an isolated point.

FIG. 81 shows the pattern 0 and the pattern 8 when the division number is 16 and the interpolation position is (14, 13). The pixel value of the point A0 is 100, the pixel value of the point A (B0) is 40, the pixel value of the point B is 0, the pixel value of the point C (C0) is 40, and the pixel value of the point D (D0) is 40. The first original pixel group A0, B0, C0 and D0 is inputted to the first linear interpolation processing section 42 of the horizontal/vertical direction interpolation section 4, whereby the elements of the interpolation direction effectiveness discrimination condition and the oblique direction interpolation selection condition are computed.

The elements related to the pattern 8 of the interpolation direction effectiveness discrimination condition are a03b01=55, c03d01=40, a03c01=55, and b03d01=40, and the interpolation direction effectiveness discrimination condition is max (a03b01, c03d01, a03c01, b03d01) = 55 and min (a03b01, c03d01, a03c01, b03d01) = 40. The elements of the oblique direction interpolation selection condition are h0t=47.5, h0b=40, v0l=51.3, and v0r=40, and the oblique direction interpolation selection condition is max (h0t, h0b, v0l, v0r) = 51.3 and min (h0t, h0b, v0l, v0r) = 40.

The interpolation direction determining section 5 determines the interpolation direction. The first oblique direction pattern information in which the pattern 0 and the pattern 8 are effective oblique direction patterns is outputted to the representative point evaluating section 52 from the oblique direction pattern search section 51.

The representative point evaluating section 52 computes, as to the effective oblique direction patterns outputted from the oblique direction pattern search section 51, the oblique direction pattern representative value qs from the representative point thereof and the second original pixel group, to thereby judge effectiveness or ineffectiveness based on the oblique direction pattern representative value qs.

The representative point of the pattern 8 is (12, 12), and the oblique direction pattern representative value qs is 35 from Expression (26). The pattern 8 is judged as an ineffective oblique direction pattern because the value 35 does not fall between min (a03b01, c03d01, a03c01, b03d01) = 40 and max (a03b01, c03d01, a03c01, b03d01) = 55. The pattern 0 is the constantly effective (oblique direction) pattern.

Accordingly, the second oblique direction pattern information in which the pattern 0 is an effective oblique direction pattern is outputted to the interpolation direction evaluation value computing section 53.

Next, the interpolation direction evaluation value computing section 53 computes the interpolation direction evaluation value of the oblique direction pattern which has been judged to be effective by the representative point evaluating section 52. The representative point evaluating section 52 has judged that the pattern 8 is ineffective, whereby only the pattern 0 is an effective oblique direction pattern. The interpolation direction evaluation value of the pattern 0 is (|100-40|+|40-40|)/2=30 in the horizontal direction and (|100-40|+|40-40|)/2=30 in the vertical direction. The computed interpolation direction evaluation values are outputted to the interpolation direction evaluating section 54.

The interpolation direction evaluating section 54 evaluates the interpolation direction of the effective oblique direction pattern contained in the second oblique direction pattern information based on the interpolation direction evaluation value computed by the interpolation direction evaluating section 53. Here, there is selected an oblique direction pattern with the minimum interpolation direction evaluation value and outputted as the interpolation direction information from the output terminal 58. Note that only the pattern 0 is an effective oblique direction pattern, and accordingly the pattern 0 is outputted.

The interpolation direction determining section 5 selects the pattern 0, and then the oblique direction interpolation section 6 performs linear interpolation processing using the second original pixel group A, B, C and D (which is the same as the first original pixel group A0, B0, C0 and D0) of the pattern 0. The interpolation coefficient of the pattern 0 is [14]: [16-14] in the horizontal direction and [13]:[16-13] in the vertical direction. Therefore, the second interpolation pixel value candidate is 41.4 from Expression (27). Note that this is the same value as the first interpolation pixel value candidate.

Meanwhile, the horizontal/vertical direction interpolation section 4 computes the first interpolation pixel value candidate from Expression (1) using the first original pixel group A0, B0, C0 and D0 and the interpolation coefficient ([14]: [16-14] in the horizontal direction and [13]:[16-13] in the vertical direction), which is 41.4. The computed first interpolation pixel value candidate is outputted to the interpolation pixel value determining section 7.

The pattern 0 is inputted as the interpolation direction information to the interpolation pixel value determining section 7. Accordingly, the second interpolation pixel value selecting section 73 selects the first interpolation pixel value candidate inputted from the horizontal/vertical direction interpolation section 4, and a value 41.4 of the first interpolation pixel value candidate is outputted as the final interpolation pixel from the output terminal 78. If the pattern 8 has been judged as an effective oblique direction pattern, the final interpolation pixel is a value 34.8 of the second interpolation pixel value candidate, which is a pixel value inappropriate for a slope of a pixel value constituted by four original pixels (first original pixel group) surrounding the interpolation pixel. Therefore, if the pattern 8 is not selected, it is possible to obtain an excellent enlarged image without generating an isolated point.

Note that in FIGS. 79 to 81, for simplicity of the description, it is assumed that only the pattern 8 is an effective oblique direction pattern, other than the pattern 0. However, in actuality, there are a plurality of patterns which are judged as effective oblique direction patterns by the oblique direction pattern search section 51 from the condition for the interpolation position. Therefore, in this embodiment, the pattern 0 is not necessarily selected also in a case where the representative point evaluating section 52 judges the pattern 8 as an ineffective oblique direction pattern. Other optimum oblique direction pattern is selected in some cases.

(Effects)

As described above, the oblique direction pattern search section 51 of the interpolation direction determining section 5 determines effective oblique direction patterns from the condition for an interpolation position, and further, the representative point evaluating section 52 narrows down the effective oblique direction patterns from the condition for the oblique direction pattern representative value qs using the representative point. Then, the interpolation direction evaluation value computing section 53 computes interpolation direction evaluation values of the other remaining effective oblique direction patterns, and the interpolation direction evaluating section 54 determines the optimum interpolation direction from the interpolation direction evaluation values. Then, the oblique direction interpolation section 6 computes the second interpolation pixel value candidate by linear interpolation from the optimum interpolation direction, and outputs the second interpolation pixel value candidate as an interpolation pixel value. As a result, it is possible to obtain the optimum interpolation pixel value corresponding to an outline (such as edge and oblique line) of an original image, to thereby obtain an excellent interpolation image (enlarged image).

Further, the oblique direction interpolation effectiveness discriminating section 71 discriminates between effectiveness and ineffectiveness of the second interpolation pixel value candidate computed by the interpolation direction interpolation section 6 from the oblique direction interpolation selection condition computed from the neighboring pixel values of the interpolation pixel by the horizontal/vertical direction interpolation section 4. Therefore, it is possible to avoid a case in which the oblique direction pattern is evaluated insufficiently by the interpolation direction determining section 5. Accordingly, the interpolation pixel value, which is judged to be inappropriate from a relationship with the neighboring pixel values of the interpolation position, is not outputted, with the result that an excellent interpolation image (enlarged image) is obtained.

(Modification)

In a case where the arithmetic operation amount is still available, it is possible to set the representative point in the representative point evaluating section 52 of the interpolation direction determining section 5 as the interpolation position itself.

In that case, the interpolation direction effectiveness discrimination condition outputted from the horizontal/vertical direction interpolation section 4 is same as the oblique direction interpolation selection condition outputted to the interpolation pixel value determining section 7 from the horizontal/vertical direction interpolation section 4, that is, as max (h0t, h0b, v01, v0r) and min (h0t, h0b, v01, v0r). Further, this is equivalent to performing, by the representative point evaluating section 52, discrimination between effectiveness and effectiveness of the second interpolation pixel value candidate by the oblique direction interpolation effectiveness discriminating section 71 of the interpolation pixel value selecting section 7, as to the all oblique direction patterns judged as the effective oblique direction patterns by the oblique direction pattern search section 51.

The interpolation direction evaluating section 54 is capable of excluding in advance the oblique direction pattern in which an appropriate interpolation pixel value is not computed before evaluating the interpolation direction evaluation value computed by the interpolation direction evaluation value computing section 53, which lowers a frequency at which an effective oblique direction pattern is not selected. As a result, it is possible to obtain a more excellent interpolation image (enlarged image).

While the invention has been shown and described in detail, the foregoing description is in all aspects illustrative and not restrictive. It is therefore understood that numerous modifications and variations can be devised without departing from the scope of the invention.

**Claims**

1. An enlarged image generating device (1) for generating an enlarged image from an inputted original image, comprising:

a horizontal/vertical direction interpolation section (4) arranged to generate a first interpolation pixel value candidate (q0) of one generated pixel (Q) which is surrounded by a first original pixel group composed of four original pixels (A0 to D0) adjacent to each other in both a horizontal direction and a vertical direction and constitutes an enlarged image, by linear interpolation from said first original pixel group;

an oblique direction pattern search section (51) arranged to search, in a given area, a plurality of sets of second original pixel groups (A to D) each composed of four original pixels which are adjacent to each other in at least one of the horizontal direction and the vertical direction and surround said generated pixel so that two parallel sides of a parallelogram to be defined by the four original pixels are parallel to at least one of the horizontal direction and the vertical direction;

an interpolation direction evaluating section (54) arranged to compute an interpolation direction evaluation value from two sets of horizontal direction difference values obtained by computing a difference between pixel values along each of two sides in the horizontal direction of the four original pixels composing said first original pixel group, from two sets of vertical direction difference values obtained by computing a difference between pixel values along each of two sides in the vertical direction of the four original pixels composing said first original pixel group, and from two sets of oblique direction difference values obtained by computing, as to each of said plurality of sets of second original pixel groups obtained by said oblique direction pattern search section, a difference between pixel values along each of two sides in an oblique direction which is not the vertical direction or the vertical direction of the four original pixels composing said second original pixel group, and arranged to determine an interpolation direction in accordance with said interpolation direction evaluation value;

an oblique direction interpolation section (6) arranged to select one original pixel group among said first original pixel group and said plurality of sets of second original pixel groups based on said interpolation direction determined by said interpolation direction evaluating section, and arranged to generate a second interpolation pixel value candidate (q) of said generated pixel from said one original pixel group by linear interpolation; and

an interpolation pixel value determining section (7) arranged to determine a pixel value of said generated pixel from said first interpolation pixel value candidate generated by said horizontal/vertical interpolation direction section and said second interpolation pixel value candidate generated by said oblique direction interpolation section.

2. The enlarged image generating device according to claim 1, wherein said interpolation pixel value determining section is arranged to set said second interpolation pixel value candidate as the pixel value of said generated pixel when a value of said second interpolation pixel value candidate is within a range of a minimum value or more to a maximum value or less of the pixel value obtained from said first original pixel group by the linear interpolation at respective intersections (h0t, h0b, v01, v0r) of respective line segments passing through a position of said generated pixel in the horizontal direction and the vertical direction and four sides of a quadrangle defined by said first original pixel group, and is arranged to set said first interpolation pixel value candidate as the pixel value of said generated pixel when the value is outside said range.

3. The enlarged image generating device according to claim 1 or 2, wherein said interpolation direction evaluating section is arranged to cause said second original pixel group to be effective when the pixel value of said generated pixel computed from said second original pixel group by the linear interpolation is within the range of the minimum value or more to the maximum value or less of the pixel value obtained from said first original pixel group by the linear interpolation at the respective intersections (h0t, h0b, v01, v0r) of the respective line segments passing through the position of said generated pixel in the horizontal direction and the vertical direction and the four sides of the quadrangle defined by said first original pixel group, and is arranged to cause said second original pixel group to be ineffective when the pixel value is outside said range.

4. The enlarged image generating device according to claim 1 or 2, wherein said interpolation direction evaluating section is arranged to set a representative point representing an area in which the quadrangle defined by said first original pixel group and the parallelogram defined by said second original pixel group overlap each other, cause said second original pixel group to be effective when a pixel value of said representative point computed from said second original pixel group by linear interpolation is within the range of the minimum value or more to the maximum value or less of the pixel value obtained from said first original pixel group by the linear interpolation at respective intersections of respective line segments passing through a position of said representative point in the horizontal direction and the vertical direction and four sides of the quadrangle defined by said first original pixel group, and cause said second original pixel group to be ineffective when the pixel value is outside said range.

5. The enlarged image generating device according to any one of claims 1 to 4, wherein said interpolation direction evaluating section is arranged to compute said interpolation direction evaluation value based on a value obtained by dividing internally, at the position of said generated pixel, said two sets of horizontal direction difference values, said two sets of vertical direction difference values and said two sets of oblique direction difference values.

6. The enlarged image generating device according to any one of claims 1 to 4, wherein said interpolation direction evaluating section is arranged to compute said interpolation direction evaluation value based on, when the position of said generated pixel is located on one side of the two sides in the horizontal direction of said first original pixel group, one side of the two sides in the vertical direction of said first original pixel group, or one side of the two sides in the oblique direction which is not the horizontal direction or the vertical direction of each of said plurality of sets of second original pixel groups obtained by said oblique direction pattern search section, one difference value obtained by computing a difference between pixel values along said one side, and based on, when the position is not located on said one side, two difference values obtained by computing a difference between pixel values along each of said two sides.

**7.** The enlarged image generating device according to claim 5 or 6, wherein said interpolation direction evaluating section is arranged to determine said interpolation direction by said first original pixel group or said second original pixel group in which said interpolation direction evaluation value is minimum.

**8.** The enlarged image generating device according to claim 7, wherein said interpolation direction evaluating section is arranged to weight said interpolation direction evaluation value by switching between horizontal direction priority, vertical direction priority and oblique direction priority.

**Patentansprüche**

**1.** Vergrößertes-Bild-Erzeugungsvorrichtung (1) zum Erzeugen eines vergrößerten Bildes aus einem eingegebenen Originalbild, umfassend:

einen Horizontal-/Vertikal-Richtungs-Interpolationsabschnitt (4), der eingerichtet ist, einen ersten Interpolationspixelwertanwärter (q0) eines erzeugten Pixels (Q) zu erzeugen, der von einer ersten Originalpixelgruppe umgeben ist, die aus vier Originalpixeln (A0 bis D0) besteht, die nebeneinander angeordnet sind in einer horizontalen Richtung und einer vertikalen Richtung, und ein vergrößertes Bild bildet, durch lineare Interpolation aus der ersten Originalpixelgruppe;
einen Querrichtungsmustersuchabschnitt (51), der eingerichtet ist, in einem gegebenen Bereich eine Vielzahl von Sätzen von zweiten Originalpixelgruppen (A bis D) zu suchen, die jeweils aus vier Originalpixeln bestehen, welche in wenigstens einer der horizontalen Richtung und der vertikalen Richtung nebeneinander angeordnet sind und den erzeugten Pixel umgeben, so dass zwei parallele Seiten eines Parallelogramms, das durch die vier Originalpixel definiert werden soll, parallel zu wenigstens einer aus der horizontalen Richtung und der vertikalen Richtung sind;
einen Interpolationsrichtungsevaluierungsabschnitt (54), der eingerichtet ist, einen Interpolationsrichtungsevaluierungswert aus zwei Sätzen von Horizontalrichtungsdifferenzwerten, die erhalten werden durch Berechnen einer Differenz zwischen Pixelwerten entlang jeder von zwei Seiten in der horizontalen Richtung der vier Originalpixel, die die erste Originalpixelgruppe bilden, aus zwei Sätzen von Vertikalrichtungsdifferenzwerten, die erhalten werden durch Berechnen einer Differenz zwischen Pixelwerten entlang jeder von zwei Seiten in der vertikalen Richtung der vier Originalpixel, die die erste Originalpixelgruppe bilden, und aus zwei Sätzen von Querrichtungsdifferenzwerten, die erhalten werden durch Berechnen, wie für jeden der Vielzahl von Sätzen von zweiten Originalpixelgruppen, erhalten durch den Querrichtungsmustersuchabschnitt, einer Differenz zwischen Pixelwerten entlang jeder der zwei Richtungen in einer Querrichtung, welche nicht die vertikale Richtung oder die vertikale Richtung der vier Originalpixel ist, die die zweite Originalpixelgruppe bilden, zu berechnen und eingerichtet ist, eine Interpolationsrichtung gemäß dem Interpolationsrichtungsevaluierungswert zu bestimmen;
einen Querrichtungsinterpolationsabschnitt (6), der eingerichtet ist, eine Originalpixelgruppe aus der ersten Originalpixelgruppe und der Vielzahl von Sätzen von zweiten Originalpixelgruppen zu wählen, basierend auf der Interpolationsrichtung, die durch den Interpolationsrichtungsevaluierungsabschnitt bestimmt wird, und eingerichtet ist, einen zweiten Interpolationspixelwertanwärter (Q) des erzeugten Pixels aus der einen Originalpixelgruppe durch lineare Interpolation zu erzeugen; und
einen Interpolationspixelwertbestimmungsabschnitt (7), der eingerichtet ist, einen Pixelwert des erzeugten Pixels, aus dem ersten Interpolationspixelwertanwärter, der durch den Horizontal-/Vertikal-Interpolationsrichtungsabschnitt erzeugt wird, und dem zweiten Interpolationspixelwertanwärter, der durch den Querrichtungsinterpolationsabschnitt erzeugt wird, zu bestimmen.

**2.** Vergrößertes-Bild-Erzeugungsvorrichtung nach Anspruch 1, wobei der Interpolationspixelwertbestimmungsabschnitt eingerichtet ist, den zweiten Interpolationspixelwertanwärter als den Pixelwert des erzeugten Pixels einzustellen, wenn ein Wert des zweiten Interpolationspixelwertanwärters sich innerhalb einer Spanne von einem Minimalwert oder mehr zu einem Maximalwert oder weniger des Pixelwerts befindet, erhalten aus der ersten Originalpixelgruppe durch die lineare Interpolation an jeweiligen Kreuzungen (h0t, h0b, v01, v0r) von jeweiligen Liniensegmenten, die eine Position des erzeugten Pixels in der horizontalen Richtung und der vertikalen Richtung durchlaufen und vier Seiten eines Vierecks, das durch die erste Originalpixelgruppe definiert wird, und eingerichtet ist, den ersten Interpolationspixelwertanwärter als den Pixelwert des erzeugten Pixels einzustellen, wenn sich der Wert außerhalb der Spanne befindet.

3. Vergrößertes-Bild-Erzeugungsvorrichtung nach Anspruch 1 oder 2, wobei der Interpolationsrichtungsevaluierungsabschnitt eingerichtet ist, zu bewirken, dass die zweite Originalpixelgruppe effektiv ist, wenn der Pixelwert des erzeugten Pixels, der aus der zweiten Originalpixelgruppe durch die lineare Interpolation berechnet wird, sich innerhalb der Spanne von dem Minimalwert oder mehr zu dem Maximalwert oder weniger des Pixelwerts befindet, erhalten aus der ersten Originalpixelgruppe durch die lineare Interpolation an den jeweiligen Kreuzungen (h0t, h0b, v01, v0r) der jeweiligen Liniensegmente, die die Position des erzeugten Pixels in der horizontalen Richtung und der vertikalen Richtung durchlaufen und die vier Seiten des Vierecks, das durch die erste Originalpixelgruppe definiert wird, und eingerichtet ist, zu bewirken, dass die zweite Originalpixelgruppe ineffektiv wird, wenn der Pixelwert sich außerhalb der Spanne befindet.

4. Vergrößertes-Bild-Erzeugungsvorrichtung nach Anspruch 1 oder 2, wobei der Interpolationsrichtungsevaluierungsabschnitt eingerichtet ist, einen repräsentativen Punkt einzustellen, der einen Bereich darstellt, in welchem das Viereck, das durch die erste Originalpixelgruppe und das Parallelogramm definiert wird, das durch die zweite Originalpixelgruppe definiert wird, einander überlappen, bewirkt, dass die zweite Originalpixelgruppe effektiv wird, wenn ein Pixelwert des repräsentativen Punkts, der aus der zweiten Originalpixelgruppe durch lineare Interpolation berechnet wird, sich innerhalb der Spanne von dem Minimalwert oder mehr zu dem Maximalwert oder weniger des Pixelwerts befindet, der aus der ersten Originalpixelgruppe durch die lineare Interpolation bei jeweiligen Kreuzungen von jeweiligen Linienabschnitten erhalten wird, die eine Position des repräsentativen Punkts in der horizontalen Richtung und der vertikalen Richtung und vier Seiten des Vierecks, das durch die erste Originalpixelgruppe definiert wird, durchlaufen, und bewirkt, dass die zweite Originalpixelgruppe ineffektiv wird, wenn der Pixelwert sich außerhalb der Spanne befindet.

5. Vergrößertes-Bild-Erzeugungsvorrichtung nach einem der Ansprüche 1 bis 4, wobei der Interpolationsrichtungsevaluierungsabschnitt eingerichtet ist, den Interpolationsrichtungsevaluierungswert basierend auf einem Wert zu berechnen, der erhalten wird, indem intern an der Position des erzeugten Pixels die zwei Sätze von Horizontalrichtungsdifferenzwerten, die zwei Sätze von Vertikalrichtungsdifferenzwerten und die zwei Sätze von Querrichtungsdifferenzwerten dividiert werden.

6. Vergrößertes-Bild-Erzeugungsvorrichtung nach einem der Ansprüche 1 bis 4, wobei der Interpolationsrichtungsevaluierungsabschnitt eingerichtet ist, den Interpolationsrichtungsevaluierungswert basierend auf, wenn die Position des erzeugten Pixels sich auf einer Seite der zwei Seiten in der horizontalen Richtung der ersten Originalpixelgruppe, einer Seite der zwei Seiten in der vertikalen Richtung der ersten Originalpixelgruppe, oder einer Seite der zwei Seiten in der Querrichtung befindet, welche nicht die Horizontalrichtung oder die Vertikalrichtung von jeder der Vielzahl von Sätzen von zweiten Originalpixelgruppen ist, erhalten durch den Querrichtungsmustersuchabschnitt, einem Differenzwert, erhalten durch Berechnen einer Differenz zwischen Pixelwerten entlang der einen Seite, und basierend auf, wenn die Position sich nicht auf der einen Seite befindet, zwei Differenzwerten, erhalten durch Berechnen einer Differenz zwischen Pixelwerten entlang jeder der beiden Seiten, zu berechnen.

7. Vergrößertes-Bild-Erzeugungsvorrichtung nach Anspruch 5 oder 6, wobei der Interpolationsrichtungsevaluierungsabschnitt eingerichtet ist, die Interpolationsrichtung durch die erste Originalpixelgruppe oder die zweite Originalpixelgruppe zu bestimmen, in welcher der Interpolationsrichtungsevaluierungswert minimal ist.

8. Vergrößertes-Bild-Erzeugungsvorrichtung nach Anspruch 7, wobei der Interpolationsrichtungsevaluierungsabschnitt eingerichtet ist, den Interpolationsrichtungsevaluierungswert zu gewichten, indem zwischen einer Horizontalrichtungspriorität, einer Vertikalrichtungspriorität und einer Querrichtungspriorität gewechselt wird.

## Revendications

1. Dispositif de génération d'image agrandie (1) destiné à générer une image agrandie à partir d'une image initiale en entrée, comprenant :

une section d'interpolation de direction horizontale/verticale (4) agencée de façon à générer un premier candidat de valeur de pixel d'interpolation (q0) d'un pixel généré (q) qui est entouré par un premier groupe de pixels initiaux composé de quatre pixels initiaux (A0 à D0) adjacents les uns aux autres tant dans une direction horizontale que dans une direction verticale et qui constitue une image agrandie, par interpolation linéaire à partir dudit premier groupe initial de pixels ;

une section de recherche de motif de direction oblique (51) agencée de façon à rechercher, dans une zone donnée, une pluralité d'ensembles de deuxièmes groupes de pixels initiaux (A à D), chacun d'eux étant composé de quatre pixels initiaux qui sont adjacents les uns aux autres dans au moins l'une parmi la direction horizontale et la direction verticale et qui entourent ledit pixel généré de telle sorte que deux côtés parallèles d'un parallélogramme à définir par les quatre pixels initiaux soient parallèles à au moins l'une parmi la direction horizontale et la direction verticale ;

une section d'évaluation de direction d'interpolation (54) agencée de façon à calculer une valeur d'évaluation de direction d'interpolation à partir de deux ensembles de valeurs de différence de direction horizontale obtenues en calculant la différence entre les valeurs des pixels le long de chacun de deux côtés dans la direction horizontale des quatre pixels initiaux composant ledit premier groupe de pixels initiaux, à partir de deux ensembles de valeurs de différence de direction verticale obtenues en calculant la différence entre les valeurs des pixels le long de chacun de deux côtés dans la direction verticale des quatre pixels initiaux composant ledit premier groupe de pixels initiaux, et à partir de deux ensembles de valeurs de différence de direction oblique obtenues en calculant, en ce qui concerne chacun de ladite pluralité d'ensembles de deuxièmes groupes de pixels initiaux obtenus par ladite section de recherche de motif de direction oblique, la différence entre les valeurs de pixel le long de chacun de deux côtés dans une direction oblique qui n'est pas la direction verticale ou la direction verticale des quatre pixels initiaux composant ledit deuxième groupe de pixels initiaux, et agencée de façon à déterminer une direction d'interpolation selon ladite valeur d'évaluation de direction d'interpolation ;

une section d'interpolation de direction oblique (6) agencée de façon à sélectionner un groupe de pixels initiaux parmi ledit premier groupe de pixels initiaux et ladite pluralité d'ensembles de deuxièmes groupes de pixels initiaux sur la base de ladite direction d'interpolation déterminée par ladite section d'évaluation de direction d'interpolation, et agencée de façon à générer un deuxième candidat de valeur de pixel d'interpolation (q) dudit pixel généré à partir dudit un groupe de pixels initiaux par interpolation linéaire ; et

une section de détermination de valeur de pixel d'interpolation (7) agencée de façon à déterminer une valeur de pixel dudit pixel généré à partir dudit premier candidat de valeur de pixel d'interpolation généré par ladite section de direction d'interpolation horizontale/verticale et dudit deuxième candidat de valeur de pixel d'interpolation généré par ladite section d'interpolation de direction oblique.

2. Dispositif de génération d'image agrandie selon la revendication 1, dans lequel ladite section de détermination de valeur de pixel d'interpolation est agencée de façon à prendre ledit deuxième candidat de valeur de pixel d'interpolation en tant que valeur de pixel dudit pixel généré lorsque la valeur dudit deuxième candidat de valeur de pixel d'interpolation se situe à l'intérieur d'une plage comprise entre une valeur minimum ou supérieure à celle-ci et une valeur maximale ou inférieure à celle-ci, de la valeur de pixel obtenue à partir dudit premier groupe de pixels initiaux par l'interpolation linéaire au niveau des intersections respectives (h0t, h0b, v01, v0r) des segments de ligne respectifs passant par une position dudit pixel généré dans la direction horizontale et la direction verticale et quatre côtés d'un quadrilatère défini par ledit premier groupe de pixels initiaux, et elle est agencée de façon à prendre ledit premier candidat de valeur de pixel d'interpolation en tant que valeur de pixel dudit pixel généré lorsque la valeur se situe en dehors de ladite plage.

3. Dispositif de génération d'image agrandie selon la revendication 1 ou 2, dans lequel ladite section d'évaluation de direction d'interpolation est agencée de façon à ce que ledit deuxième groupe de pixels initiaux soit en vigueur lorsque la valeur de pixel dudit pixel généré calculée à partir dudit deuxième groupe de pixels initiaux par l'interpolation linéaire se situe à l'intérieur de la plage comprise entre la valeur minimum ou supérieure à celle-ci et la valeur maximale ou inférieure à celle-ci, de la valeur de pixel obtenue à partir dudit premier groupe de pixels initiaux par l'interpolation linéaire au niveau des intersections respectives (h0t, h0b, v01, v0r) des segments de ligne respectifs passant par la position dudit pixel généré dans la direction horizontale et la direction verticale et les quatre côtés du quadrilatère défini par ledit premier groupe de pixels initiaux, et elle est agencée de façon à ce que ledit deuxième groupe de pixels initiaux ne soit pas en vigueur lorsque la valeur de pixel se situe en dehors de ladite plage.

4. Dispositif de génération d'image agrandie selon la revendication 1 ou 2, dans lequel ladite section d'évaluation de direction d'interpolation est agencée de façon à prendre un point représentatif représentant une zone dans laquelle le quadrilatère défini par ledit premier groupe de pixels initiaux et le parallélogramme défini par ledit deuxième groupe de pixels initiaux se chevauchent l'un l'autre, faire en sorte que ledit deuxième groupe de pixels initiaux soit en vigueur lorsqu'une valeur de pixel dudit point représentatif calculé à partir dudit deuxième groupe de pixels initiaux par interpolation linéaire se situe dans la plage comprise entre la valeur minimum ou supérieure à celle-ci et la valeur maximale ou inférieure à celle-ci, de la valeur de pixel obtenue à partir dudit premier groupe de pixels initiaux par l'interpolation linéaire au niveau des intersections respectives des segments de ligne respectifs passant par une position dudit point représentatif dans la direction horizontale et la direction verticale et quatre côtés du quadrilatère défini par ledit premier groupe de pixels initiaux, et faire en sorte que ledit deuxième groupe de pixels initiaux ne soit pas en vigueur lorsque la valeur de pixel se situe en dehors de ladite plage.

5. Dispositif de génération d'image agrandie selon l'une quelconque des revendications 1 à 4, dans lequel ladite section d'évaluation de direction d'interpolation est agencée de façon à calculer ladite valeur d'évaluation de direction d'interpolation sur la base d'une valeur obtenue en divisant en interne, au niveau de la position dudit pixel généré, lesdits deux ensembles de valeurs de différence de direction horizontale, lesdits deux ensembles de valeurs de différence de direction verticale et lesdits deux ensembles de valeurs de différence de direction oblique.

6. Dispositif de génération d'image agrandie selon l'une quelconque des revendications 1 à 4, dans lequel ladite section d'évaluation de direction d'interpolation est agencée de façon à calculer ladite valeur d'évaluation de direction d'interpolation sur la base, lorsque la position dudit pixel généré se situe sur un côté des deux côtés dans la direction horizontale dudit premier groupe de pixels initiaux, un côté des deux côtés dans la direction verticale dudit premier groupe de pixels initiaux, ou un côté des deux côtés dans la direction oblique qui n'est pas la direction horizontale ou la direction verticale de chacun de ladite pluralité d'ensembles de deuxièmes groupes de pixels initiaux obtenus par ladite section de recherche de motif de direction oblique, d'une valeur de différence obtenue en calculant la différence entre les valeurs de pixels le long dudit un côté, et sur la base, lorsque la position ne se situe pas sur ledit un côté, de deux valeurs de différence obtenues en calculant la différence entre les valeurs de pixels le long de chacun desdits deux côtés.

7. Dispositif de génération d'image agrandie selon la revendication 5 ou 6, dans lequel ladite section d'évaluation de direction d'interpolation est agencée de façon à déterminer ladite direction d'interpolation par ledit premier groupe de pixels initiaux ou ledit deuxième groupe de pixels initiaux où ladite valeur d'évaluation de direction d'interpolation est minimale.

8. Dispositif de génération d'image agrandie selon la revendication 7, dans lequel ladite section d'évaluation de direction d'interpolation est agencée de façon à pondérer ladite valeur d'évaluation de direction d'interpolation en changeant entre une priorité de direction horizontale, une priorité de direction verticale et une priorité de direction oblique.

ENLARGED IMAGE GENERATING DEVICE ⌐1

EP 2 182 484 B1

F I G . 2

HORIZONTAL DIRECTION

VERTICAL DIRECTION

SCANNING SEQUENCE

F I G . 3

29a 29b

2

22

INTERPOLATION
PIXEL POSITION
COMPUTING
SECTION

28

21

23

24

DATA WRITING
SECTION

DATA READING
SECTION

27

25a 25b

26a 26b

FIG. 4

43

INTERPOLATION
POSITION INFORMATION

44

ORIGINAL PIXEL DATA
(FIRST ORIGINAL PIXEL
GROUP DATA)

4

41

FIRST
INTERPOLATION
COEFFICIENT
COMPUTING
SECTION

FIRST
INTERPOLATION
COEFFICIENT

42

FIRST LINEAR
INTERPOLATION
PROCESSING
SECTION

46

OBLIQUE DIRECTION
INTERPOLATION
SELECTION
CONDITION

45

FIRST
INTERPOLATION
PIXEL VALUE
CANDIDATE

INTERPOLATION
DIRECTION
EFFECTIVENESS
DISCRIMINATION
CONDITION

47

EP 2 182 484 B1

~5

~51

OBLIQUE DIRECTION PATTERN SEARCH SECTION

55 INTERPOLATION POSITION INFORMATION

57 INTERPOLATION DIRECTION EFFECTIVENESS DISCRIMINATION CONDITIONS

FIRST OBLIQUE DIRECTION PATTERN INFORMATION

52 REPRESENTATIVE POINT EVALUATING SECTION

SECOND OBLIQUE DIRECTION PATTERN INFORMATION

~53 INTERPOLATION DIRECTION EVALUATION VALUE COMPUTING SECTION

~54 INTERPOLATION DIRECTION EVALUATING SECTION

INTERPOLATION DIRECTION INFORMATION

58

56 ORIGINAL PIXEL DATA (SECOND ORIGINAL PIXEL GROUP DATA)

59 INTERPOLATION DIRECTION PRIORITY SETTING

F I G . 6

EP 2 182 484 B1

F I G . 7

OBLIQUE 74
DIRECTION
INTERPOLATION
SELECTION
CONDITION

71
OBLIQUE DIRECTION
INTERPOLATION
EFFECTIVENESS
DISCRIMINATING
SECTION

EFFECTIVENESS/
INEFFECTIVENESS
DISCRIMINATING SIGNAL

73

72

75
FIRST
INTERPOLATION
PIXEL VALUE
CANDIDATE

72a

73a

78

72c 73b

73c

72b

76
INTERPOLATION
DIRECTION
INFORMATION

77
SECOND INTERPOLATION
PIXEL VALUE CANDIDATE

F I G . 8

N DIVISION   HOT

N DIVISION   AO
P(i,j)

y

BO
P(i+1,j)

Q
(x,y)

N-x

VOL

x

VOR

N-y

CO
P(i,j+1)

HOB   DO
P(i+1,j+1)

40

F I G . 9

F I G . 1 0

F I G . 1 1

F I G . 1 2

F I G . 1 3

F I G . 1 4

F I G . 1 5

F I G . 1 6

F I G . 1 7

F I G . 1 8

F I G . 1 9

F I G . 2 0

F I G . 2 1

F I G . 2 2

F I G . 2 3

F I G . 2 4

F I G . 2 5

F I G . 2 6

F I G . 2 7

F I G . 2 8

F I G . 2 9

F I G . 3 0

F I G . 3 1

F I G . 3 2

F I G . 3 3

F I G . 3 4

F I G . 3 5

F I G . 3 6

F I G . 3 7

F I G . 3 8

FIG. 39

FIG. 40

FIG. 41

F I G . 4 2

F I G . 4 3

F I G . 4 4

F I G . 4 5

F I G . 4 6

F I G . 4 7

F I G . 4 8

AO
A01B01
BO
A
B
A01CO2
A01CO1
BO1DO2
C
D
CO
CO1D01
DO

F I G . 4 9

AO
A01B01
BO
A
B
A02CO1
BO2D01
C
D
CO1D01
CO
DO

F I G . 5 0

AO
A01B01
BO
A
B
BO2D01
A02CO1
CO1D01
C
D
CO
DO

FIG. 51

FIG. 52

FIG. 53

F I G . 5 4

F I G . 5 5

F I G . 5 6

F I G . 5 7

F I G . 5 8

F I G . 5 9

F I G . 6 O

F I G . 6 1

F I G . 6 2

FIG. 63

A0  B0
A  y  B
N-(x-y)
x-y
N-y  C  D
C0  D0

FIG. 64

A0  B0
A  y  B
x+2y  N-(x+2y)
N-y
C  D
C0  D0

FIG. 65

A0  B0
A  B
y
x+(-N+2y)  N-{x+(-N+2y)}
N-y
C  D
C0  D0

F I G . 6 6

F I G . 6 7

F I G . 6 8

F I G . 6 9

F I G . 7 0

F I G . 7 1

F I G . 7 2

F I G . 7 3

F I G . 7 4

# F I G . 7 5

AO

BO

A

B

y

N-{x-(-2N+4y)}

x-(-2N+4y)

CO

N-y

DO

C

D

# F I G . 7 6

GO

N DIVISION

A

EVALUATION
VALUE

B

y

N DIVISION

EVALUATION
VALUE

Q

EO

(x,y)

N-x

x

FO

N-y

C

HO

D

F I G . 7 7

F I G . 7 8

F I G . 7 9

F I G . 8 0

F I G . 8 1

**REFERENCES CITED IN THE DESCRIPTION**

**Patent documents cited in the description**

- JP 3739405 B

- JP 2002024815 A